(19) Europäisches Patentamt / European Patent Office / Office européen des brevets

(11) **EP 2 718 086 B1**

(12) **EUROPEAN PATENT SPECIFICATION**

(45) Date of publication and mention
of the grant of the patent:
**02.12.2020 Bulletin 2020/49**

(21) Application number: **12796496.3**

(22) Date of filing: **07.06.2012**

(51) Int Cl.:
**B05C 5/02** *(2006.01)*      **B05C 11/10** *(2006.01)*
**B29C 48/31** *(2019.01)*

(86) International application number:
**PCT/US2012/041389**

(87) International publication number:
**WO 2012/170713 (13.12.2012 Gazette 2012/50)**

(54) **SLOT DIE POSITION ADJUSTMENT**

SCHLITZDÜSEN-POSITIONSEINSTELLUNG

RÉGLAGE DE POSITION DE FILIÈRE À FENTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.06.2011 US 201113155272
25.01.2012 US 201261590771 P**

(43) Date of publication of application:
**16.04.2014 Bulletin 2014/16**

(73) Proprietor: **3M Innovative Properties Company
Saint Paul MN 55133-3427 (US)**

(72) Inventors:
• **TRICE, Jennifer L.**
**St. Paul, MN 55133-3427 (US)**
• **SECOR, Robert B.**
**St. Paul, MN 55133-3427 (US)**
• **YAPEL, Robert A.**
**St. Paul, MN 55133-3427 (US)**
• **LOUKUSA, Pentti K.**
**St. Paul, MN 55133-3427 (US)**
• **THOMAS, Paul C.**
**St. Paul, MN 55133-3427 (US)**

• **BIEGLER, Kristopher K.**
**St. Paul, MN 55133-3427 (US)**
• **KOPECKY, William J.**
**St. Paul, MN 55133-3427 (US)**
• **BRUESEWITZ, Keith R.**
**St. Paul, MN 55133-3427 (US)**
• **NEAVIN, Terence D.**
**St. Paul, MN 55133-3427 (US)**
• **SECOR, Ethan B.**
**St. Paul, MN 55133-3427 (US)**
• **KOSTUCH, Gregory D.**
**St. Paul, MN 55133-3427 (US)**

(74) Representative: **Mathys & Squire
Mathys & Squire Europe LLP
Theatinerstraße 7
80333 München (DE)**

(56) References cited:
EP-A2- 0 307 076          EP-A2- 0 357 071
US-A- 5 489 402          US-A- 5 587 184
US-A- 5 770 129          US-A- 6 039 904
US-A1- 2003 080 307     US-A1- 2003 116 881
US-A1- 2005 008 782

**Description**

**TECHNICAL FIELD**

This disclosure relates to slot dies.

**BACKGROUND**

Generally, slot dies include die lips that form an applicator slot. The width of the applicator slot can extend about the width of a moving web or the width of a roller that receives the extruded product, such as a film. As used herein, with respect to slot dies and components of slot dies, "a width" refers to the cross-web (or cross-roller) dimension of a slot die and its components. In this regard, an applicator slot of a slot die extends about the width of the slot die.

Slot dies are commonly used to form extrusions and coatings. As an example, slot dies are used in slot die coatings to apply a liquid material to a moving flexible substrate or "web." There are many variations in techniques for slot die coatings. As one example, coating materials can be at room temperature or a controlled temperature. When a coating material temperature is elevated to ensure that the coating material is melted or liquefied for processing, this is often referred to as "hot melt" coating. In other examples, a coating material can include solvent diluents. Solvents can be water, organic solvents, or any suitable fluid that dissolves or disperses components of a coating. Solvents are typically removed in subsequent processing such as by drying. A coating can include single or multiple layers, and some slot dies may be used to apply multiple layers simultaneously. A coating can be a continuous coating across the width of the die or instead include forming strips, each strip extending across only a portion of the width of the die and being separated from adjacent strips.

Slot dies are also used to form extrusions, including thin-film extrusions or other extrusions. In some examples, extrusions can be extrusion coatings and applied to a web substrate, a process which may be referred to as extrusion coating. In other examples, the extruded material forms a film or web directly. An extruded film might be subsequently processed by length orienting or tentering operations. As with coating, the extrudate might comprise a single layer or multiple layers.

The thickness of an extruded product, such as a film or coating, is dependent upon, among other factors, the flow rate of the extrudate through the slot die. In one example, a slot die can include an adjustable choker bar within the flow path that can be used to locally adjust the flow rate of the extrudate through the slot die to provide a desired thickness profile. A slot die can also include a flexible die lip that can be used to locally adjust the thickness of the applicator slot itself to control the flow rate of the extrudate from the applicator slot to provide a desired thickness profile.

A slot die may include a plurality of actuators spaced about the width of the applicator slot in order to provide a desired thickness profile for an extruded product. For example, each actuator can be configured to provide a local positional adjustment of a choker bar or flexible die lip.

After starting an extrusion process using a slot die, the cross-web profile of an extrudate can be measured. Each actuator may then need to be individually adjusted to provide a desired thickness profile, such as a consistent thickness, for the extruded product across the width of the applicator slot.

Examples of slot die systems are disclosed by : EP0307076, US5770129, EP0357071 and US 6039904.

**SUMMARY**

In general, this disclosure is directed to techniques for preselecting actuator settings according to a desired property of an extruded product or a desired property of the slot die during the extrusion. In one example, the position of each actuator in a plurality of actuators may be selected according to a preselected cross-web profile of the extruded product.

According to the invention, this disclosure is directed to a system according to claim 1.

In another example, which is not part of the present invention, this disclosure is directed to a non-transitory computer readable medium storing executable instructions configured to cause a programmable controller to operate a slot die. The includes an applicator slot extending about a width of the slot die, wherein the applicator slot is in fluid communication with a fluid flow path through the slot die, and a plurality of actuators spaced about the width of the slot die. Each actuator in the plurality of actuators is operable to adjust a cross-directional thickness of the fluid flow path at its respective location to provide a local adjustment of fluid flow through the applicator slot. The executable instructions are configured to cause the programmable controller to predict a set of discrete settings from a plurality of discrete settings corresponding to a preselected cross-web profile for an extrudate based on a known correlation between the set of discrete settings and the cross-web profile of the extrudate, and set the position of each actuator according to the predicted set of discrete settings for operation of the slot die.

In a further example, which is not part of the present invention, this disclosure is directed to a method of operating a slot die, wherein the slot die includes an applicator slot extending about a width of the slot die, wherein the applicator slot is in fluid communication with a fluid flow path through the slot die, and a plurality of actuators spaced about the width of the slot die. Each actuator in the plurality of actuators is operable to adjust a cross-directional thickness of the fluid flow path at its respective location to provide a local adjustment of fluid flow through the applicator slot. The method comprises predicting, with a controller, a set of discrete settings from a plurality of discrete settings corresponding to a preselected cross-web profile for an extrudate based on a known correlation between the set of discrete settings and the cross-web profile of the extrudate, and setting the position of each actuator according to the predicted set of discrete settings for operation of the slot die.

The details of one or more examples of this disclosure are set forth in the accompanying drawings and the description below. Other features, objects, and advantages of this disclosure will be apparent from the description and drawings, and from the claims.

## BRIEF DESCRIPTION OF DRAWINGS

FIGS. 1A - 1B illustrate a slot die including a choker bar with a plurality of actuators, each actuator operable to adjust a cross-directional thickness of the fluid flow path at its location.

FIG. 2 illustrates a slot die including an adjustable rotary rod with a plurality of actuators connected to the rotary rod, each actuator operable to adjust the local position of the rotary rod at its location and thereby adjust the local thickness of the applicator slot.

FIG. 3 illustrates a slot die including a flexible die lip with a plurality of actuators connected to the flexible die lip, each actuator operable to adjust the local position of the flexible die lip at its location and thereby adjust the local thickness of the applicator slot.

FIG. 4 illustrates an actuator assembly including a position sensor and a controller for selecting the position of the actuator assembly based on the output of the position sensor.

FIG. 5 is a flowchart illustrating techniques for selecting the position of each actuator in a plurality of actuators of a slot die according to a preselected cross-web profile of the extruded product.

FIG. 6 is a flowchart illustrating techniques for selecting the position of each actuator in a plurality of actuators of a slot die according to a preselected die cavity pressure during operation of the die.

FIG. 7 is a flowchart illustrating techniques for clearing a slot die by increasing the cross-directional thickness of the fluid flow path adjacent each of the actuators while continuing to operate the die.

FIG. 8 is a flowchart illustrating techniques for purging a slot die by substantially closing fluid flow path adjacent each of the actuators while continuing to operate the die.

FIG. 9 illustrates a strip coating including a pattern created by repeatedly adjusting actuator position settings in a slot die.

FIG. 10 illustrates an extruded product including a pattern created by repeatedly adjusting actuator position settings in a slot die.

FIGS. 11A - 11D illustrate an example user interface for a slot die controller.

FIGS. 12 - 14 illustrate bump test data, which may be utilized to select a desired die slot profile or change in die slot profile.

FIG. 15 illustrates an example worksheet demonstrating techniques for selecting inputs to change actuator positions to provide a desired die slot profile.

FIGS. 16 and 17 illustrate flow sensitivity profiles, which may be utilized to select a desired die slot profile or change in die slot profile in order to provide a desired extrudent profile.

FIG. 18 illustrates techniques retrofitting a slot die with a set of actuator assemblies.

## DETAILED DESCRIPTION

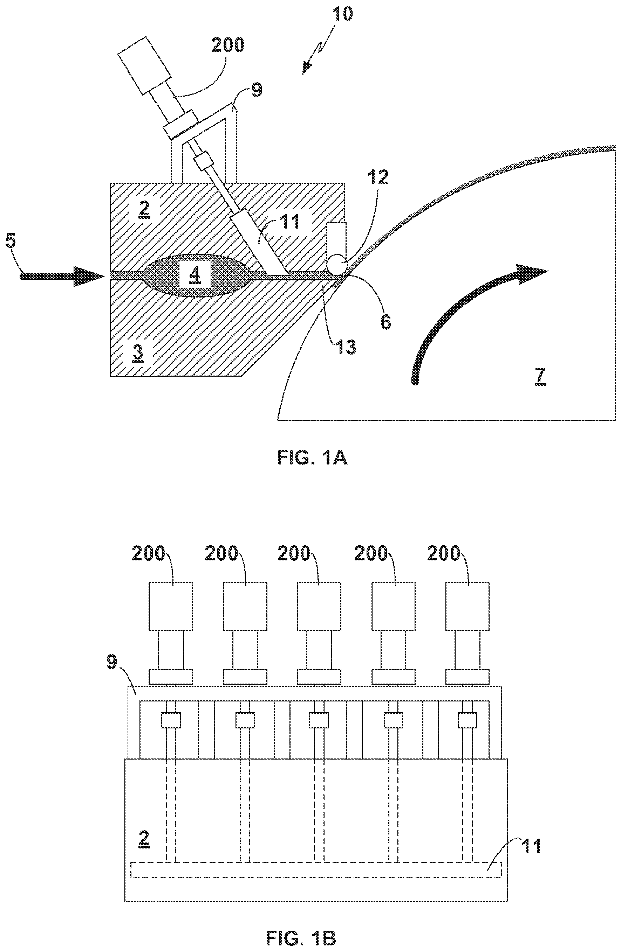

FIGS. 1A - 1B illustrate slot die 10. Slot die 10 includes an upper die block 2 and a lower die block 3. Upper die block 2 combines with lower die block 3 to form a fluid flow path through slot die 10. The fluid flow path includes entry 5, die cavity 4 and applicator slot 6. Applicator slot 6 is between rotary rod 12, which is mounted to upper die block 2, and die lip 13 of lower die block 3. Because slot die 10 includes rotary rod 12 at its applicator slot, slot die 10 may be referred to as a rotary rod die.

Slot die 10 includes a choker bar 11 that extends across the width of the fluid flow path within slot die 10. As one example, the width of the fluid flow path within slot die 10 at choker bar 11 may be approximately the same as the width of applicator slot 6 such that choker bar 11 extends about the width of applicator slot 6. Actuator assemblies 200 are mounted on a common mounting bracket 9 and spaced about the width of slot die 10. In some examples, mounting bracket 9 may be segmented, e.g., mounting bracket 9 may include separate structures for each actuator assembly 200. Each actuator assembly 200 is operable to adjust a cross-directional thickness of the fluid flow path at its respective location about the width of slot die 10 to provide a local adjustment of fluid flow through applicator slot 6 by changing the position of choker bar 11 within the fluid flow path of the extrudate within die 10.

During operation of slot die 10, an extrudate enters slot die 10 at fluid flow path entry 5 and continues through the fluid flow path of slot die 10, including die cavity 4 until the extrudate exits through applicator slot 6 and is applied to moving roller 7. In some examples, the extruded product may be applied to a moving web (not shown), in other examples, the extruded product may be applied directly to roller 7. The extruded product and web (if applicable) may be run over a series of rollers to allow the extruded product to cool. One or more additional processes may be performed to the extruded product downstream of roller 7. While not germane to this disclosure, such processes include, but are not limited to, stretching, coating, texturing, printing, cutting, rolling, etc.

As best shown in FIG. 1B, slot 10 includes a set of five actuator assemblies 200 mounted on a common mounting bracket 9. Each actuator assembly 200 is attached to choker bar 11 and actuator assemblies 200 are spaced about a width of choker bar 11. Each of the actuators is operable to control the thickness of the fluid flow path at its location by providing a local adjustment of the position of choker bar 11 within the fluid flow path within slot die 10.

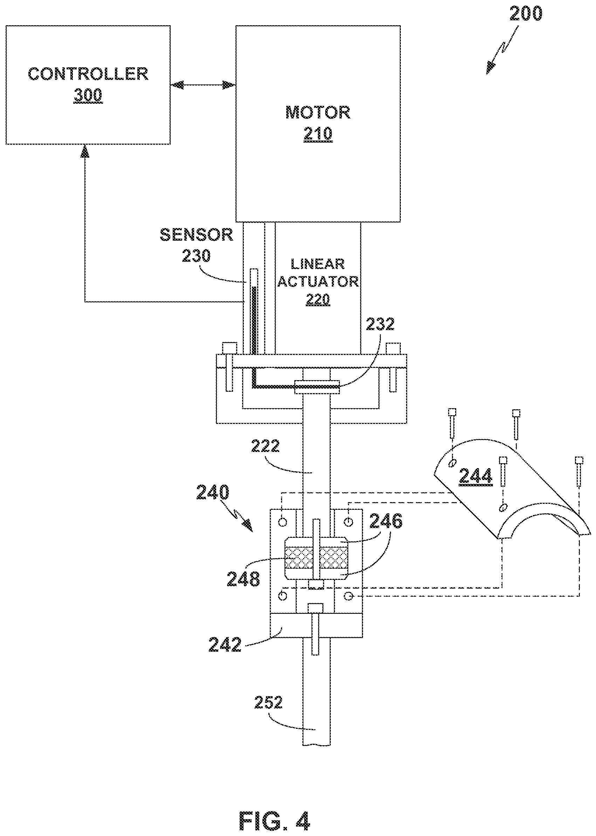

As discussed in further detail with respect to FIG. 4, each of actuator assemblies 200 includes a motor that drives a linear actuator. Each of actuator assemblies 200 also includes a precision sensor, such as a linear variable differential transformer (LVDT) or a linear encoder, that detects position movements of the output shaft of the linear actuator. The output shafts of linear actuator assemblies 200 are spaced about the width of choker bar 11 such that each linear actuator assembly 200 is operable to adjust the local position of the choker bar. As discussed in further detail below, the positions of each linear actuator are individually selectable to provide a desired cross-web profile of an extruded product. In addition, the positions of linear actuator assemblies 200 can be precisely coordinated to provide a desired die cavity pressure within die cavity 4 during the operation of slot die 10 by adjusting the overall cross-sectional area of the fluid flow path adjacent choker bar 11 within slot die 10. In other examples, the positions of each actuator assembly 200 may be actively controlled to create an extruded product with patterned features, such as repeating or random patterned features. As referred to herein, references to the position of an actuator or actuator assembly are intended to more specifically refer to the relative positioning of the actuator output shaft.

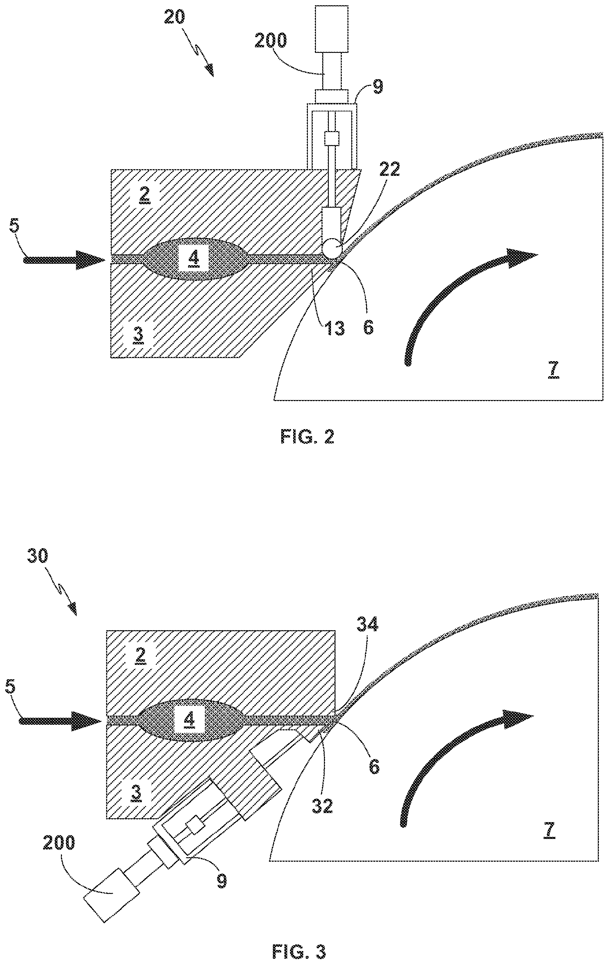

FIG. 2 illustrates slot die 20. Slot die 20 includes adjustable rotary rod 22 with a plurality of actuator assemblies 200 connected to rotary rod 22. Each actuator assembly 200 is operable to adjust the local position of rotary rod 22 at its location and thereby adjust the local thickness of applicator slot 6. Some aspects of slot die 20 are similar to those of slot die 10 and are discussed in limited detail with respect to slot die 20. Components of slot die 20 that have the same reference numeral as components in slot die 10 are substantially similar to the like-numbered components of slot die 10.

Slot die 20 includes an upper die block 2 and a lower die block 3. Upper die block 2 combines with lower die block 3 to form a fluid flow path through slot die 20. The fluid flow path includes entry 5, die cavity 4 and applicator slot 6. Applicator slot 6 is between adjustable rotary rod 22, which is mounted to upper die block 2 and die lip 13 of lower die block 3. Because slot die 20 includes adjustable rotary rod 22 at its applicator slot, slot die 20 may be referred to as a rotary rod die.

Slot die 20 differs from slot die 10 in that the thickness of applicator slot 6 is controlled by actuator assemblies 200, which connect to rotary rod 22. Actuator assemblies 200 are mounted on a common mounting bracket 9 and spaced about the width of slot die 20. Each actuator assembly 200 is operable to adjust a cross-directional thickness of the fluid flow path at its respective location about the width of slot die 20 to provide a local adjustment of fluid flow through applicator slot 6 by changing the position of rotary rod 22. While only one actuator assembly 200 is shown in FIG. 2, slot die 20 includes a set of actuator assemblies 200 spaced about the width of rotary rod 22 and slot die 20 and, similar to the arrangement of actuator assemblies 200 as shown in FIG. 1B.

During operation of slot die 20, an extrudate enters slot die 20 at fluid flow path entry 5 and continues through the fluid flow path of slot die 20, including die cavity 4, until the extrudate exits through applicator slot 6 and is applied to moving roller 7. In some examples, the extruded product may be applied to a moving web (not shown), in other examples, the extruded product may be applied directly to roller 7. The extruded product and web (if applicable) may be run over a series of rollers to allow the extruded product to cool. One or more additional processes may be performed to the extruded product downstream of roller 7, such processes include, but are not limited to, stretching, coating, texturing, printing, cutting, rolling, etc.

Each of actuator assemblies 200 is operable to control the thickness of the fluid flow path at its location by providing a local adjustment of the position of rotary rod 22. As discussed in further detail below, the positions of each actuator assembly 200 are individually selectable to provide a desired cross-web profile of an extruded product. In addition, the positions of linear actuator assemblies 200 can be precisely coordinated to provide a desired die cavity pressure within die cavity 4 during the operation of slot die 20 by adjusting the overall cross-sectional area of applicator slot 6. In other examples, the positions of each actuator assembly 200 may be actively controlled to create an extruded product with patterned features, such as repeating or random patterned features.

While slot die 20 does not include a choker bar, in other examples, a slot die with an adjustable rotary rod may also include an adjustable choker bar, like choker bar 11 of slot die 10. The position of such a choker bar may be locally controlled by a set of actuators, just as with choker bar 11 of slot die 10.

FIG. 3 illustrates slot die 30. Slot die 30 includes flexible die lip 32 with a plurality of actuator assemblies 200 connected to flexible die lip 32. Each actuator assembly 200 is operable to adjust the local position of flexible die lip 32 at its location and thereby adjust the local thickness of applicator slot 6. Some aspects of slot die 30 are similar to those of slot die 10 and slot die 20 and are discussed in limited detail with respect to slot die 30. Components of slot die 30 that have the same reference numeral as components in slot die 10 and slot die 20 are substantially similar to the like-numbered components of slot die 10 and slot die 20.

Slot die 30 includes an upper die block 2 and a lower die block 3. Upper die block 2 combines with lower die block 3 to form a fluid flow path through slot die 30. The fluid flow path includes entry 5, die cavity 4 and applicator slot 6. Applicator slot 6 is between die lip 34, which is part of upper die block 2, and flexible die lip 32 of lower die block 3.

Slot die 30 differs from slot die 10 in that the thickness of applicator slot 6 is controlled by actuator assemblies 200, which connect to flexible die lip 32. Actuator assemblies 200 are mounted on a common mounting bracket 9 and spaced about the width of slot die 30. Each actuator 200 is operable to adjust a cross-directional thickness of the fluid flow path at its respective location about the width of slot die 30 to provide a local adjustment of fluid flow through applicator slot 6 by changing the position of flexible die lip 32. While only one actuator 300 is shown in FIG. 3, slot die 30 includes a set of actuator assemblies 200 spaced about the width of flexible die lip 32and slot die 30 and, similar to the arrangement of actuator assemblies 200 as shown in FIG. 1B.

During operation of slot die 30, an extrudate enters slot die 30 under pressure at fluid flow path entry 5 and continues through the fluid flow path of slot die 30, including die cavity 4, until the extrudate exits through applicator slot 6 and is applied to moving roller 7. In some examples, the extruded product may be applied to a moving web (not shown), in other examples, the extruded product may be applied directly to roller 7. The extruded product and web (if applicable) may be run over a series of rollers to allow the extruded product to cool.

In other examples, slot die 30 may be used with a different configuration of rollers. For example, the extrudate may form a curtain that drops onto a downstream roller, in this case referred to as a casting wheel, that can be temperature controlled. In other examples, an extrudate curtain may drop vertically or traverse horizontally (or any angle) into a nip of two rollers for subsequent processing. This is often used in both film extrusion and extrusion coating operations.

One or more additional processes may be performed to the extruded product downstream of roller 7; such processes include, but are not limited to, stretching, coating, texturing, printing, cutting, rolling, etc.

Each of actuator assemblies 200 is operable to control the thickness of the fluid flow path at its location by providing a local adjustment of the position of flexible die lip 32. As discussed in further detail below, the positions of each actuator assembly 200 are individually selectable to provide a desired cross-web profile of an extruded product. In addition, the positions of linear actuator assemblies 200 can be precisely coordinated to provide a desired die cavity pressure within die cavity 4 during the operation of slot die 30 by adjusting the overall cross-sectional area of applicator slot 6. In other examples, the positions of each actuator assembly 200 may be actively controlled to create an extruded product with patterned features, such as repeating or random patterned features.

While slot die 30 does not include a choker bar, in other examples, a slot die with a flexible die lip may also include an adjustable choker bar, like choker bar 11 of slot die 10. The position of such a choker bar may be locally controlled by a set of actuators, just as with choker bar 11 of slot die 10.

FIG. 4 illustrates an assembly including actuator assembly 200, zero-backlash coupler 240 and controller 300. As shown in FIGS. 1A - 3, actuator assembly 200 may be used in a slot die to provide a local adjustment of a fluid flow path of the slot die, e.g., by adjusting the thickness of an applicator slot as with slot dies 20, 30 or by adjusting the thickness of a fluid flow path within the slot die as with slot die 10.

Actuator assembly 200 includes motor 210, linear actuator 220, which is coupled to motor 210, and position sensor 230. As one example, motor 210 may be a stepper motor. The output shaft (not shown) of motor 210 is mechanical coupled to linear actuator 220. Sensor 230 senses the position of linear actuator 220. For example, sensor 230 may be a LVDT sensor or a linear encoder. Sensor 230 is secured to output shaft 222 of linear actuator 220 with clamp 232 and precisely measures the relative position of output shaft 222 of linear actuator 220. In other examples, the sensor 230 might measure the output coupler 240, die actuator linkage 252, flexible die lip 32, rotary rod 22, or choker bar 11. As one example, actuator assemblies that are suitable for use as actuator assemblies 200 are available from Honeywell International Incorporated of Morristown, New Jersey.

Controller 300 receives position inputs from both motor 210 and sensor 230. For example, motor 210 may be a stepper motor and may provide an indication of the number of "steps" the stepper motor has taken from a known reference position of the stepper motor. Sensor 230 may provide more precise position information to controller 300 than that provided by the motor 210. Controller 300 provides instructions to motor 210 to drive output shaft 222 of actuator 220 to a preselected position. For example, controller 300 may monitor the position output shaft 222 of actuator 220 with sensor 230 while operating motor 210 in order to position output shaft 222 of actuator 220 according to a preselected position. In some examples, controller 300 may control a set of actuator assemblies 200, either simultaneously or sequentially. For example, controller 300 may control each of the actuator assemblies 200 in slot die 10, as shown in FIG. 1B.

In slot dies 10, 20, 30, output shaft 222 of actuator 220 is connected to die actuator linkage 252 by zero-backlash coupler 240. Zero backlash coupler 240 includes two halves that screw together: bottom half 242 and top half 244. Bottom half 242 is directly attached to die actuator linkage 252 with a screw. In addition, zero backlash coupler 240 includes a stacked protrusion assembly that bolts onto the end of output shaft 222 of actuator 220. The stacked protrusion assembly includes two metallic discs 246 surrounding an insulative disc 248. As one example, insulative disc 248 may comprise a ceramic material. Bottom half 242 and top half 244 combine to encircle the stacked protrusion assembly, including metallic discs 246 and insulative disc 248, bolted onto the end of output shaft 222 of actuator 220. Once top half 244 is securely screwed to bottom half 242, output shaft 222 of actuator 220 is effectively connected to zero-backlash coupler 240 and die actuator linkage 252.

Zero-backlash coupler 240 functions to thermally isolate actuator assembly 200 from the slot die. In particular, insulative disc 248 significantly limits the metal-to-metal contact path between output shaft 222 of actuator 220 and die actuator linkage 252. This helps protect actuator assembly 200 from damaging heat of a slot die. For example, slot dies commonly operate at temperatures in excess of three-hundred degrees Fahrenheit, whereas the components of actuator assembly 200, including motor 210 and sensor 230 may experience limited functionality or even permanent damage when subjected to temperatures to in excess of 54.4 °C one-hundred-thirty degrees Fahrenheit). For this reason, zero-backlash coupler 240 may function to keep the temperature of actuator assembly 200 54.4 °C (one-hundred-thirty degrees Fahrenheit) or less. In some examples, discs 246 may also be formed from non-metallic materials such that there is no metal-to-metal contact between output shaft 222 of actuator 220 and die actuator linkage 252. Such examples further thermally isolate actuator assembly 200 from the slot die housing. In a further example, the surface area of the coupling 240 can be chosen to dissipate heat to keep the temperature of the actuator assembly 200 54.4 °C ( one-hundred-thirty degrees Fahrenheit) or less. This might be use independently or in combination with the insulative disc 248. In further examples, active thermal control can be used cool to zero-backlash coupler 240, output shaft 222 or actuator assembly 200. Suitable examples of active thermal control include convective air flow, circulating liquid and thermo-electron devices.

In contrast to slot-die designs that utilize differential bolts as actuation mechanism, zero-backlash coupler 240 couples the output shaft 222 of actuator 220 to die actuator linkage 252 with limited or no backlash. Whereas as a differential bolt mechanism may have a backlash of more than one-hundred micrometers, zero-backlash coupler 240 may provide almost no backlash, such as less than ten micrometers, or even less than five micrometers, such as about three micrometers.

In a slot die utilizing a set of differential bolts to control applicator slot width or choker bar position, the relatively large backlash of each differential bolt means that adjusting the position of one differential bolt may change the thickness of the fluid flow path at other bolts. For this reason, the absolute position of the choker bar may never be known while operating the extrusion die. In contrast, in slot dies 10, 20, 30 the position of output shaft 222 of actuator 220 directly corresponds to the local position of choker bar 11 (for slot die 10), rotary rod 22 (for slot die 20) and flexible die lip 32 (for slot die 30). For this reason, slot dies 10, 20 and 30 facilitate repeatable, precise positioning not available in slot dies utilizing differential bolts as actuation mechanism.

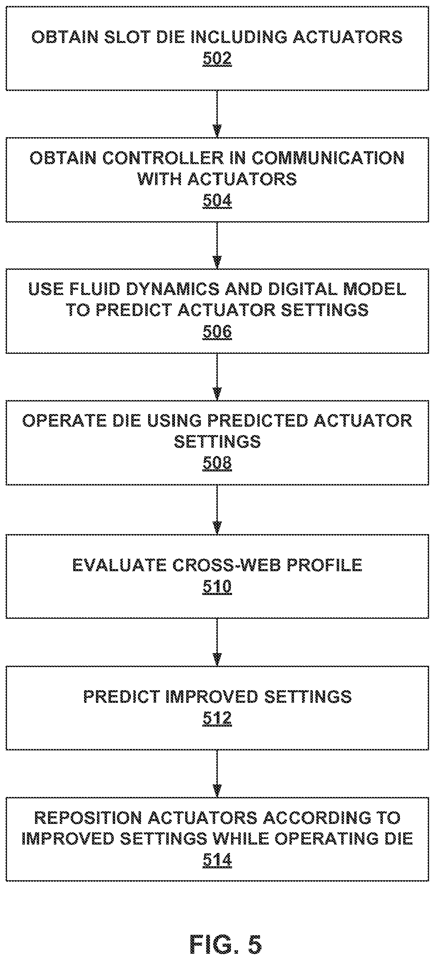

FIG. 5 is a flowchart illustrating techniques for selecting the position of each actuator in a plurality of actuators of a slot die according to a preselected cross-web profile of the extruded product. While not limited to the slot dies disclosed herein, for clarity, the techniques of FIG. 5 are described with respect to slot die 10 (FIGS. 1A - 1B), actuator assembly 200 (FIG. 4) and controller 300 (FIG. 4). In different examples, the techniques of FIG. 5 may be utilized for strip coating, a film slot die, a multi-layer slot die, a hot melt extrusion coating die, a drop die, a rotary rod die, an adhesive slot die, a solvent coating slot die, a water-based coating die, a slot fed knife die or other slot die.

First, a slot die, such as slot die 10, is obtained (502). The slot die includes an applicator slot extending about a width of the slot die and a plurality of actuators spaced about the width of the slot die. The applicator slot is in fluid communication with a fluid flow path through the slot die. Each actuator in the plurality of actuators is operable to adjust a cross-directional thickness of the fluid flow path at its respective location to provide a local adjustment of fluid flow through the applicator slot.

Next, a controller, such as controller 300, in communication with each actuator is obtained (504). The controller is configured to set the position of each actuator according to one of a plurality of discrete settings, such as measured position of sensor 230 and/or a stepper motor setting for motor 210.

Using fluid dynamics and a digital model of die 10, such as a solid model of die 10, controller 300 predicts a set of discrete settings from the plurality of discrete settings corresponding to a preselected cross-web profile (506). In different examples, controller 300 may retrieve the preselected cross-web profile from a non-transitory computer readable medium or may receive the preselected cross-web profile from a user input.

In different examples, the predicted setting may correspond to measurements from sensor 230 and/or discrete positions settings for motor 210. Sensor 230 may provide more precise position information to controller 300 than that provided by the motor 210. For this reason, controller 300 may predict settings for an actuator assembly 200 based on measurements from sensor 230 and may operate motor 210 to locate output shaft 222 according to the predicted setting rather than directly driving motor 210 to a number of step corresponding to the predicted position.

In a slot die according to the invention including a plurality of actuators (200), each actuator assembly includes a measurement instrument, such as sensor 230, each measurement instrument is configured to provide a local measurement of the slot die, the local measurement corresponding to the cross-directional thickness of the fluid flow path at the location of the respective measurement instrument. When a controller, such as controller 200 positions each of the actuators, e.g., according to the set of discrete settings, the controller may monitor the local measurements from the measurement instruments. The controller may then, for each of the actuators, adjust the relative position of the actuator until the actuator provides the absolute cross-directional thickness of the fluid flow path at the respective location of the actuator defined by the set of discrete settings.

Fluid dynamics, fluid properties of the extrudate, and a digital model of a die allows controller 300 to predict discrete setting for the actuators of slot die 10. In many applications, it is desirable to provide a consistent thickness of an extruded product across the entire width of the die. As another example for strip coating controller may predict discrete setting for the actuators of slot die 10 to predict a set of discrete settings from the plurality of discrete settings corresponding to a preselected strip width.

Modeling of an extrudate flowing through a die may incorporate many aspects of the die itself including applicator slot width, a distance from the manifold cavity to the exit of the applicator slot, and a slot thickness, which is the narrow dimension of the applicator slot between the two parallel surfaces defining the slot itself. One fundamental issue in attaining the uniformity of the flow, and critical uniformity of the coated product, is the ability to construct a die with the best possible uniformity of the die slot "thickness." The sensitivity is greater than linear, which means that variations in die slot thickness are magnified in extruded products.

Modeling the flow may make use of any appropriate models characterizing fluid rheology. For example, modeling the flow may include finite element analysis or may more directly rely on one or more equations. As one example, for a power law fluid, the relationship between flow in the slot and the slot geometry is given by the equation:

$$\frac{Q}{W} = \frac{nB^2}{2(1+2n)}(BP/2KL)^{1/n} \qquad \textbf{(Equation 1)}$$

In Equation 1, Q/W is the flow per unit width, B is the slot height, P is pressure, L is the slot length (corresponding to the die width), n is the power law index and K is the coefficient for power law viscosity. A Newtonian constant viscosity fluid has n=1 and K is then the numerical viscosity.

As another example, slot uniformity can be characterized by the uniformity of the walls of the slot. If each slot has a Total Indicated Runout or TIR of 2t, then the percent uniformity of the flow from the slot is then:

$$\% = 100\left((B+t)^{(2+1/n)} - (B-t)^{(2+1/n)}\right)/B^{(2+1/n)} \qquad \textbf{(Equation 2)}$$

For a constant viscosity (Newtonian) fluid, this means that the coating uniformity goes as the cube of the slot height (B). This relationship is shown as Equation 3.

$$\% \text{ Coat Uniformity} = 100\left((B_{MAX})^3 - (B_{MIN})^3\right)/B_{AVG}^3 \qquad \textbf{(Equation 3)}$$

While Equation 3 may not be directly used to predict slot settings because Equation 3 may not account for all details including details related to the extrusion flows, materials, to the die design itself. However, Equation 3 demonstrates the importance for providing a precisely tuned thickness across the width of the die. In particular, Equation 3 demonstrates that any variations in the thickness of the fluid flow path are magnified in the resulting cross-web profile of the extruded product.

Equation 1 may, for example, be used to predict a die slot change because, according to the techniques disclosed herein, the position of the actuator, and by inference the die slot thickness B, is known in combination with the desired extrudate target thickness, the current measured extrudate thickness. Previously, knowing the absolute position of the die slot thickness during an extrusion process has not be possible, e.g., due to the backlash in differential bolts. Using the known target thickness and the measured extruded product thickness profile, Equation 1 can predict an appropriate die slot change. For example, as we know by inference the relationship between die slot thickness profile and extruded product thickness profile from the known die slot thickness profile and the measured extruded product thickness profile and can thus predict a slot thickness profile to obtain the target thickness profile.

Assuming that other elements of the flow path are of less importance, for a Newtonian fluid, the predicted slot thickness corresponding to actuator "i", B'$_i$ is calculated as shown in Equation 4.

$$B_i' = \left(\frac{t_i'}{t_i}\right)^{1/3} B_i$$

**(Equation 4)**

For a Power Law fluid, Equation 4 may be represented as Equation 5.

$$B_i' = B_i \left(\frac{t_i'}{t_i}\right)^{\left(1/2 + \frac{1}{n}\right)}$$

**(Equation 5)**

For purposes of illustration, the fluid mechanical predictions can include the geometric circumstances of the die. For a flexible die lip such as flexible die lip 32 in FIG. 3, the slot height may be better approximated by considering converging or diverging slots with a nominal fixed slot at the hinge point. Assuming the hinge point slot remains constant, then Equation 6 applies.

$$B(x) = B_{Hinge} + \frac{\left(B_{Lip} - B_{Hinge}\right)}{L} x$$

**(Equation 6)**

According to the fluid mechanics lubrication approximation:

$$\frac{Q}{W} = \frac{\left(P_{Lip} - P_{Hing}\right)B_{Hinge}^2 B_{Lip}^2}{6\mu\left(B_{Hinge} + B_{Lip}\right)}$$

**(Equation 7)**

This results in Equation 8. Equation 9 represents c$_i$ for Equation 8.

$$B_{i,Lip}' = \frac{C_i \pm \sqrt{C_i^2 + 4C_i B_{i,Hinge}^5}}{2B_{i,Hinge}^2}$$

**(Equation 8)**

$$C_i = \frac{B_{i,Hinge}^2 B_{i,Lip}^2}{\left(B_{i,Hinge} + B_{i,Lip}\right)}$$

**(Equation 9)**

These closed form examples are useful, but it is clear that one may extend the model to include every conceived detail of the mechanical, thermal, and fluid dynamical process details. The better the predictive model, the more rapid the techniques disclosed herein will converge to the best operating condition for the desired extrudate profile.

Equations 1 - 9 are merely exemplary, and any number of equations may be used to predict the settings for actuator assemblies 200 in slot die 10 corresponding to a preselected cross-web profile. For example, predicting the optimal settings for actuator assemblies 200 in slot die 10 may include modeling heat transfer and thermal dissipation throughout slot die 10 and the extrudate. Such predictive modeling may include prediction of the mechanical deflections of the die assembly and mechanical elements due to thermal and flow induced forces. As previously mentioned, such models may rely upon finite element analysis, or may use more general equations to predict the settings for actuator assemblies 200 in slot die 10 corresponding to the preselected cross-web profile.

Once controller 300 predicts the settings for actuator assemblies 200 in slot die 10 corresponding to the preselected cross-web profile, slot die 10 is operated by passing an extrudate through the fluid flow path and out applicator slot 6 with the actuator assemblies 200 positioned according to the set of predicted settings (508).

During the operation of slot die 10, controller evaluates the cross-web profile of the extrudate after it exits the applicator slot according to measurements of the extruded product (510). For example, controller 300 may receive inputs from a sensor that directly measures thicknesses of the extruded product at multiple cross-web locations. As one example, a beta radiation thickness gauge may be used to measure the thicknesses of the extruded product during operation of a slot die. For strip coating, controller 300 may receive inputs from a sensor that directly measures strip width and/or thickness of individual strips. Using the evaluation of the cross-web profile, fluid dynamics and the digital model of the die, controller 300 then determines whether adjustments to the predicted set of discrete settings may provide a cross-web profile of the extrudate after it exits the applicator slot that more closely matches the preselected cross-web profile.

If controller 300 determines that adjustments to the predicted set of discrete settings may provide a cross-web profile of the extrudate after it exits the applicator slot that more closely matches the preselected cross-web profile, the controller predicts an improved set of discrete settings from the plurality of discrete settings corresponding to the preselected cross-web profile (512). While continuing to operate the slot die by passing the extrudate through the fluid flow path and out the applicator slot, controller 300 repositions the actuators according to the improved predicted set of discrete settings (514). Steps 510, 512 and 514 may be repeated until controller 300 determines that the predicted set of settings cannot be improved and/or at periodic intervals to maintain a desired cross-web profile. A set of discrete settings (514) can be saved as a recipe for future retrieval and use at a future time minutes, hours, or years later when similar materials, extrusion or coating properties, and processing conditions are required.

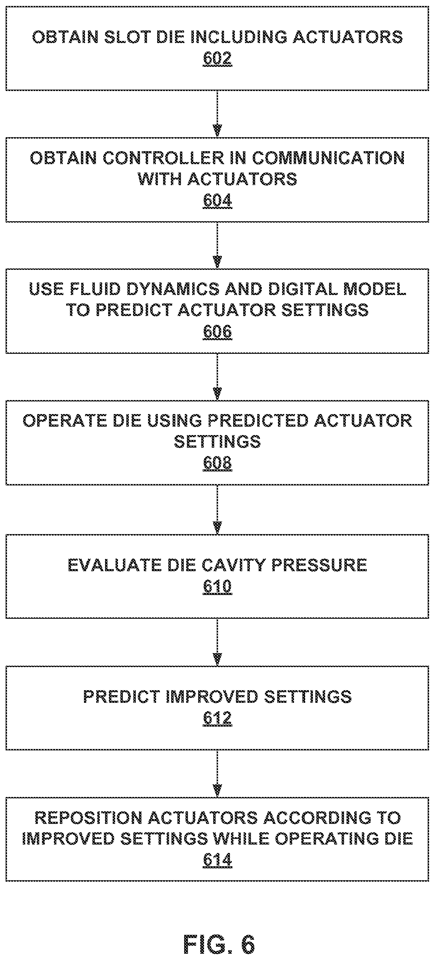

FIG. 6 is a flowchart illustrating techniques for selecting the position of each actuator in a plurality of actuators of a slot die according to a preselected die cavity pressure. While not limited to the slot dies disclosed herein, for clarity, the techniques of FIG. 6 are described with respect to slot die 10 (FIGS. 1A - 1B), actuator assembly 200 (FIG. 4) and controller 300 (FIG. 4). In different examples, the techniques of FIG. 6 may be utilized for a film slot die, a multi-layer slot die, a hot melt extrusion coating die, a drop die, a rotary rod die, an adhesive slot die, a solvent coating slot die, a water-based coating die, a slot fed knife die or other slot die.

First, a slot die, such as slot die 10, is obtained (602). The slot die includes an applicator slot extending about a width of the slot die and a plurality of actuators spaced about the width of the slot die. The applicator slot is in fluid communication with a fluid flow path through the slot die. Each actuator in the plurality of actuators is operable to adjust a cross-directional thickness of the fluid flow path at its respective location to provide a local adjustment of fluid flow through the applicator slot.

Next, a controller, such as controller 300, in communication with each actuator is obtained (604). The controller is configured to set the position of each actuator according to one of a plurality of discrete settings, such as measured position of sensor 230 and/or a stepper motor setting for motor 210.

Using fluid dynamics and a digital model of die 10, such as a solid model of die 10, controller 300 predicts a set of discrete settings from the plurality of discrete settings corresponding to a preselected die cavity pressure (606). In different examples controller 300 may retrieve the preselected die cavity pressure from a non-transitory computer readable medium or may receive the preselected die cavity pressure from a user input.

In different examples, the predicted setting may correspond to measurements from sensor 230 and/or discrete positions settings for motor 210. Sensor 230 may provide more precise position information to controller 300 than that provided by the motor 210. For this reason, controller may predict settings for an actuator assembly 200 based on measurements from sensor 230 and may operate motor 210 to locate output shaft 222 according to the predict setting rather than directly driving motor 210 to a number of step corresponding to the predicted position.

Fluid dynamics, known fluid properties of the extrudate, and a digital model of a die allows controller 300 to predict discrete setting for the actuators of slot die 10. Modeling of an extrudate flowing through a die may incorporate many aspects of the die itself including applicator slot width, a distance from the manifold cavity to the exit of the applicator slot, and a slot thickness, which is the narrow dimension of the applicator slot between the two parallel surfaces defining the slot itself.

Any number of equations may be used to predict the settings for actuator assemblies 200 in slot die 10 corresponding to a preselected die cavity pressure. For example, predicting the optimal settings for actuator assemblies 200 in slot die 10 may include modeling heat transfer and thermal dissipation throughout slot die 10 and the extrudate. As previously mentioned, such models may rely upon finite element analysis, or may use more general equations to predict the settings for actuator assemblies 200 in slot die 10 corresponding to the preselected die cavity pressure.

Once controller 300 predicts the settings for actuator assemblies 200 in slot die 10 corresponding to the preselected die cavity pressure, slot die 10 is operated by passing an extrudate through the fluid flow path and out applicator slot 6 with the actuator assemblies 200 positioned according to the set of predicted settings (608).

During the operation of slot die 10, controller measures the die cavity pressure within die cavity 4 (610) or at a suitable measurement point in flow path, which may occur before or after fluid flow path entry 5. For example, controller 300 may receive inputs from a sensor that directly measures die cavity pressure within die cavity 4. Using the measured die cavity pressure, fluid dynamics and the digital model of the die, controller 300 then determines whether adjustments to the predicted set of discrete settings may provide a die cavity pressure that more closely matches the preselected die cavity pressure.

If controller 300 determines that adjustments to the predicted set of discrete settings may provide a die cavity pressure that more closely matches the preselected die cavity pressure, the controller predicts an improved set of discrete settings from the plurality of discrete settings corresponding to the preselected die cavity pressure (612). While continuing to operate the slot die by passing the extrudate through the fluid flow path and out the applicator slot, controller 300 repositions the actuators according to the improved predicted set of discrete settings (614). Steps 610, 612 and 614 may be repeated until controller 300 determines that the predicted set of settings cannot be improved and/or at periodic intervals to maintain a desired die cavity pressure.

In some examples, the techniques of FIG. 6 may be combined with the techniques of FIG. 5. For example, controller 300 may seek to provide a cross-web profile with a consistent thickness, while also maintaining a preselected die cavity pressure. In such examples, controller 300 may use the same fluid dynamics and a digital model of the die discussed with respect to FIG. 5 and FIG. 6 to determine settings for actuator assemblies 200 that will provide both a cross-web profile and a preselected die cavity pressure. In one example, the pressure control enables control of a die arranged to coat strips or precise width. Further, the pressure control can be accomplished where a sensor to detect strip width in communication with controller 300 is utilized to select the die pressure control. A set of discrete settings (514) can be saved as a recipe for future retrieval and use at a future time minutes, hours, or years later when similar materials, extrusion or coating properties, and processing conditions are required.

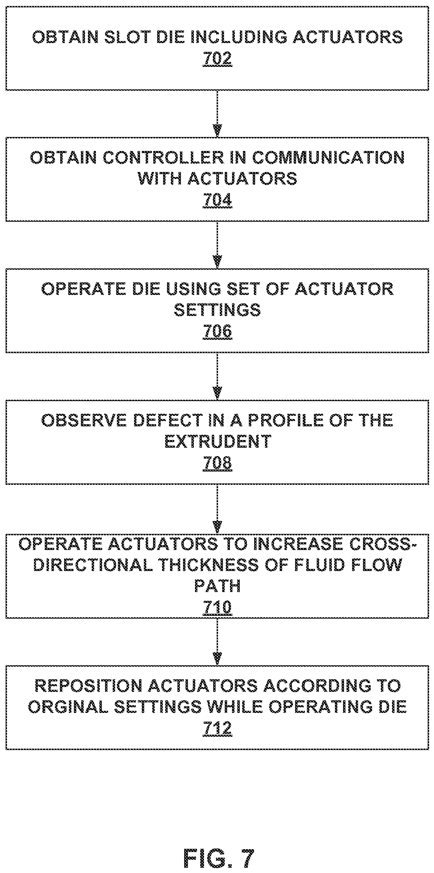

FIG. 7 is a flowchart illustrating techniques for clearing a slot die by increasing the cross-directional thickness of the fluid flow path adjacent each of the actuators while continuing to operate the die. While not limited to the slot dies disclosed herein, for clarity, the techniques of FIG. 7 are described with respect to slot die 10 (FIGS. 1A - 1B), actuator assembly 200 (FIG. 4) and controller 300 (FIG. 4). In different examples, the techniques of FIG. 7 may be utilized for a film slot die, a multi-layer slot die, a hot melt extrusion coating die, a drop die, a rotary rod die, an adhesive slot die, a solvent coating slot die, a water-based coating die, a slot fed knife die or other slot die.

First, a slot die, such as slot die 10, is obtained (702). The slot die includes an applicator slot extending about a width of the slot die and a plurality of actuators spaced about the width of the slot die. The applicator slot is in fluid communication with a fluid flow path through the slot die. Each actuator in the plurality of actuators is operable to adjust a cross-directional thickness of the fluid flow path at its respective location to provide a local adjustment of fluid flow through the applicator slot.

Next, a controller, such as controller 300, in communication with each actuator is obtained (704). The controller is configured to set the position of each actuator according to one of a plurality of discrete settings, such as measured position of sensor 230 and/or a stepper motor setting for motor 210. Controller 300 then positions each of the actuators with the controller according to a set of discrete settings selected from the plurality of discrete settings (706), and slot die 10 is operated by passing an extrudate through the fluid flow path and out applicator slot 6 with the actuator assemblies 200 positioned according to the set of discrete settings (708).

Next, a defect in a profile of the extrudate after the extrudate flows out of the applicator slot is observed, e.g., either by controller 300 or by a user. As discussed in conjunction with Equation 3, any small disturbance to the flow in the die slot will result in a disruption to the flow of liquid emitted from the die slot, thus affecting the cross-web uniformity of the extruded product or coating. Often, such disturbances are associated with gels or particulates getting caught in the die slot itself. In coating, this flow blockage results in a streak, or if wider, a band in the coating. In film extrusion, this results in undesirable die lines. For this reason, it is desirable to allow the impurity to pass through the die.

In order to allow the impurity to pass through the die, once the defect in the profile of the extrudate after the extrudate flows out of the applicator slot is observed, controller 300 increases the cross-directional thickness of the fluid flow path adjacent each of the actuator assemblies 200 while continuing to pass the extrudate through the fluid flow path and out the applicator slot (710). For example, controller 300 may operate actuator assemblies 200 in unison or sequentially to increase the thickness of the fluid flow path through slot die 10.

After increasing the cross-directional thickness of the fluid flow path adjacent each of the actuators to allow the disturbance to clear the die, while continuing to pass the extrudate through the fluid flow path and out the applicator slot, controller repositions each of the actuators with the controller according to the original set of discrete settings, i.e., the most recent set of adjusted settings prior to the purge operation, to resume operating the slot die with the actuators positioned according to the original set of discrete settings (712). In some examples, the repositioning of the actuators according to the original set of discrete settings may occur within thirty minutes, such as less than fifteen minutes, less than five minutes, less than two minutes or even less than one minute, of increasing the cross-directional thickness of the fluid flow path adjacent the actuators.

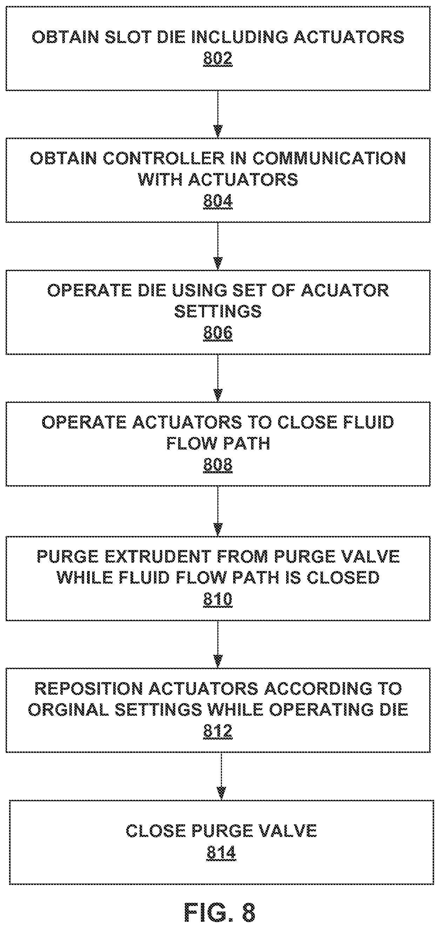

FIG. 8 is a flowchart illustrating techniques for purging a slot die by substantially closing the fluid flow path adjacent each of the actuators while continuing to operate the die. While not limited to the slot dies disclosed herein, for clarity, the techniques of FIG. 8 are described with respect to slot die 10 (FIGS. 1A - 1B), actuator assembly 200 (FIG. 4) and controller 300 (FIG. 4). In different examples, the techniques of FIG. 8 may be utilized for a film slot die, a multi-layer slot die, a hot melt extrusion coating die, a drop die, a rotary rod die, an adhesive slot die, a solvent coating slot die, a water-based coating die, a slot fed knife die or other slot die.

First, a slot die, such as slot die 10, is obtained (802). The slot die includes an applicator slot extending about a width of the slot die and a plurality of actuators spaced about the width of the slot die. The applicator slot is in fluid communication with a fluid flow path through the slot die. Each actuator in the plurality of actuators is operable to adjust a cross-directional thickness of the fluid flow path at its respective location to provide a local adjustment of fluid flow through the applicator slot.

Next, a controller, such as controller 300, in communication with each actuator is obtained (804). The controller is configured to set the position of each actuator according to one of a plurality of discrete settings, such as measured position of sensor 230 and/or a stepper motor setting for motor 210. Controller 300 then positions positioning each of the actuators with the controller according to a set of discrete settings selected from the plurality of discrete settings, and slot die 10 is operated by passing an extrudate through the fluid flow path and out applicator slot 6 with the actuator assemblies 200 positioned according to the set of discrete settings (806).

Next, either a user or controller 300 decides to interrupt the extrusion process through slot die 10. Accordingly, controller 300 substantially closes the fluid flow path adjacent each of the actuator assemblies 200 (808). For example, controller 300 may operate actuator assemblies 200 in unison or sequentially to substantially the fluid flow path through slot die 10.

Actually stopping flow of the extrudate through slot die 10 may be undesirable; e.g., it may take significant time on start-up to each equilibrium temperatures of slot die 10 and the extrudate. In addition, for a heated extrudate, stopping the flow may be undesirable due to thermal degradation of the stagnant material in the flow system. For this reason, a slot die, such as slot die 10, may include a purge valve (not shown in the figures). The extrudate may continue to flow through the slot die once by purging the extrudate from the purge valve while the fluid flow path is substantially closed (810). For example, the purge valve may operate as a pressure relief valve and may open automatically once controller 300 substantially closes the fluid flow path adjacent each of the actuator assemblies 200 due to increased pressure within die cavity 4. In other examples, the purge valve may be actively opened, either by controller 300 or an operator.

After substantially closing the fluid flow path adjacent each of the actuator assemblies 200, while continuing to purging the extrudate from the purge valve, once ready to resume operations, controller 300 repositions each of the actuators according to the original set of discrete settings (812). In addition, the purge valve is closed, either automatically or manually to resume operation of the slot die (814). In some examples, the repositioning of the actuators according to the original set of discrete settings to resume operating the slot die with the actuators positioned according to the set of discrete settings may occur within thirty minutes, such as less than fifteen minutes, less than five minutes, less than two minutes or even less than one minute, of substantially closing the fluid flow path.

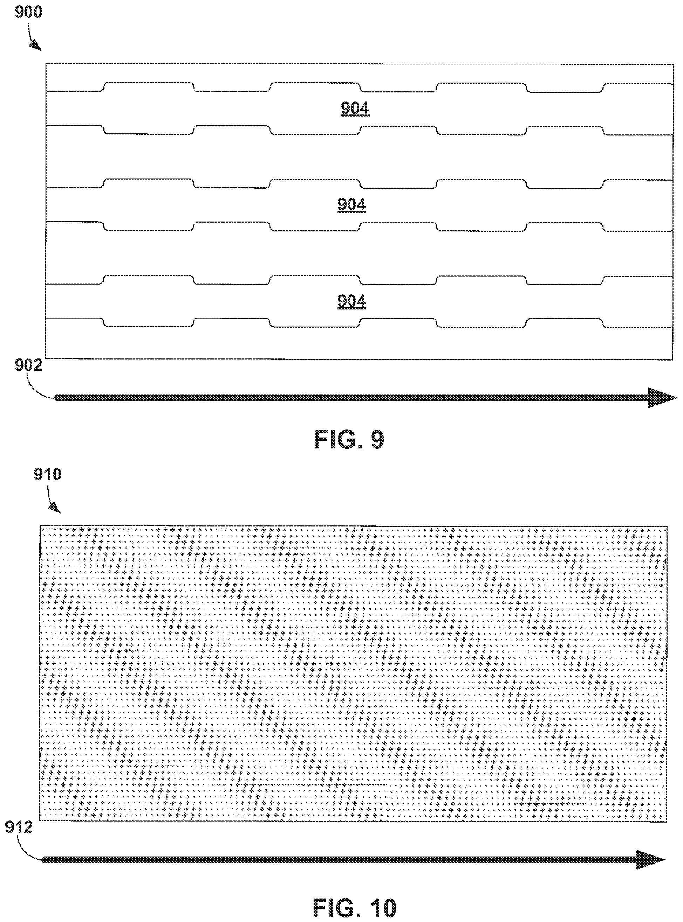

FIG. 9 illustrates a strip coating 900, which includes strips 904 that form a strip pattern created by repeatedly adjusting actuator position settings in a slot die. Strips 904 were extruded simultaneously from a single die, such as slot die 10 along direction 902. In particular, strip coating 900 provides strips 904 having varying widths.

A slot die, such as slot die 10 may be operated to produce strips 904 by positioning each of the actuators with the controller according to a first set of discrete settings selected from the plurality of discrete settings and by passing an extrudate through the fluid flow path and out the applicator slot with the actuators positioned according to the first set of discrete settings. Then, while passing the extrudate through the fluid flow path and out the applicator slot, controller 300 may change the positions of the actuators with the controller to create strips having varying widths.

For example, controller 300 may cycle between a series of sets of discrete settings including the first set of discrete settings such that the varying widths of strips 904 provide a substantially repeating pattern, such as that shown in FIG. 9. Controller 300 may continue to change the position of the actuators while passing the extrudate through the fluid flow path and out the applicator slot to create varying widths in the extrudate for a period in excess of ten minutes, such as a period in excess of thirty minutes, a period in excess of one hour, a period in excess of three hours or even a period in excess of twelve hours.

FIG. 10 illustrates extruded product 910 including a pattern created by repeatedly adjusting actuator position settings in a slot die. Extruded product 910 was extruded from a die, such as slot die 10 along direction 912. As shown in FIG. 10, lighter sections represent relatively thicker portions of the patterned product and darker sections represent relatively thinner portions of the patterned product. In particular, extruded product 910 includes a series of ridges that extend at an angle across a width of product 910.

A slot die, such as slot die 10, may be operated to produce extruded product 910 by positioning each of the actuators with the controller according to a first set of discrete settings selected from the plurality of discrete settings and by passing an extrudate through the fluid flow path and out the applicator slot with the actuators positioned according to the first set of discrete settings. Then, while passing the extrudate through the fluid flow path and out the applicator slot, controller 300 may change the positions of the actuators with the controller to create patterned features in the extrudate.

In some examples, controller 300 may selects randomized settings from the plurality of discrete settings such that the patterned features in the extrudate are randomized pattern features. The randomized settings selected by the controller conform to preselected specifications for the randomized pattern features, for example, such preselected specifications may represent an average extruded product thickness, a standard deviation of product thickness or other product profile specification.

In other examples, controller 300 may cycle between a series of sets of discrete settings including the first set of discrete settings such that the patterned features in the extrudate are a substantially repeating pattern, such as that shown in FIG. 10. Controller 300 may continue to change the position of the actuators while passing the extrudate through the fluid flow path and out the applicator slot to create patterned features in the extrudate for a period in excess of ten minutes, such as a period in excess of thirty minutes, a period in excess of one hour, a period in excess of three hours or even a period in excess of twelve hours.

Controller 300 may retrieve the first set of discrete settings and preselected specifications for the pattern features from a non-transitory computer readable medium. In other examples, controller 300 may receive the first set of discrete settings and preselected specifications for the pattern features from a user input.

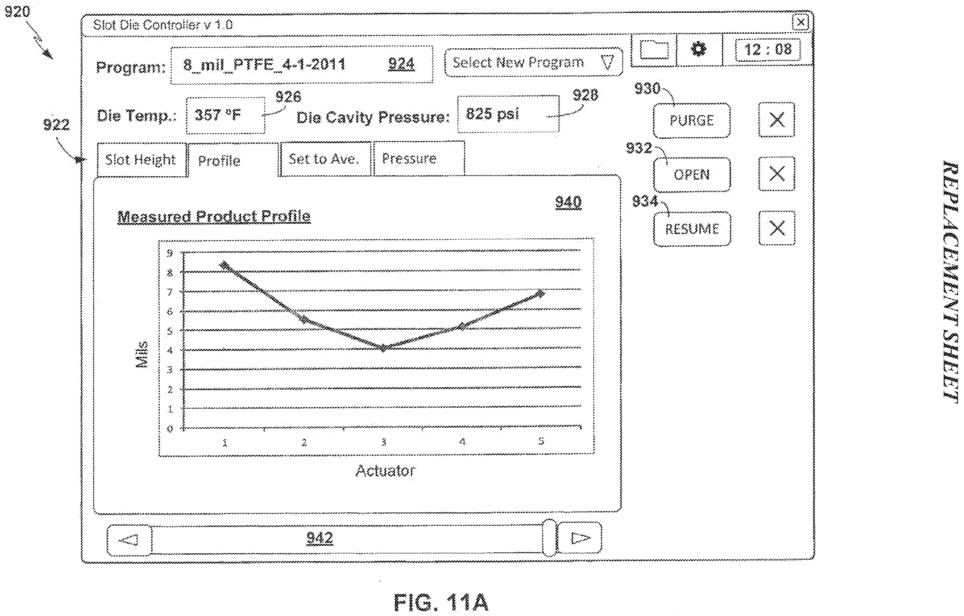

FIGS. 11A - 11D illustrate an example user interface 920 for a slot die controller. User interface 920 may interact with controller 300 to control operations of a set of actuator assemblies to control the operation of a slot die. As indicated in FIG. 11A, user interface 920 includes indications of a selected slot die operation program 924, die temperature 926 and die pressure 928. User interface 920 also include a set of selectable buttons that control operations of the die as well as corresponding cancel button, which allow a user to cancel the selection of one of the selectable buttons in the event that a selectable button was inadvertently activated. Selectable button 930 is configured to initiate a purge operation, such as the techniques disclosed herein with respect to FIG. 8. Selectable button 932 is configured to initiate a slot-clearing operation, such as the techniques disclosed herein with respect to FIG. 7. Selectable button 934 is configured to resume operation of the slot die according to the previous settings after a purge operation or a slot-clearing operation.

FIG. 11A also illustrates profile tab 940. Selection of profile tab 940 displays a graph including an indication of an extrudate product profile measured across a width of the extrudate product. The chart also displays an actuator number relative to the width of the extrudate product. In addition, profile tab 940 includes a scroll bar 942, which may be used to view the extrudate product profile at different times. However, as shown in FIG. 11A, scroll bar 942 is in the most forward position, such that profile tab 940 displays the current extrudate product profile and not a historical record of the extrudate product profile.

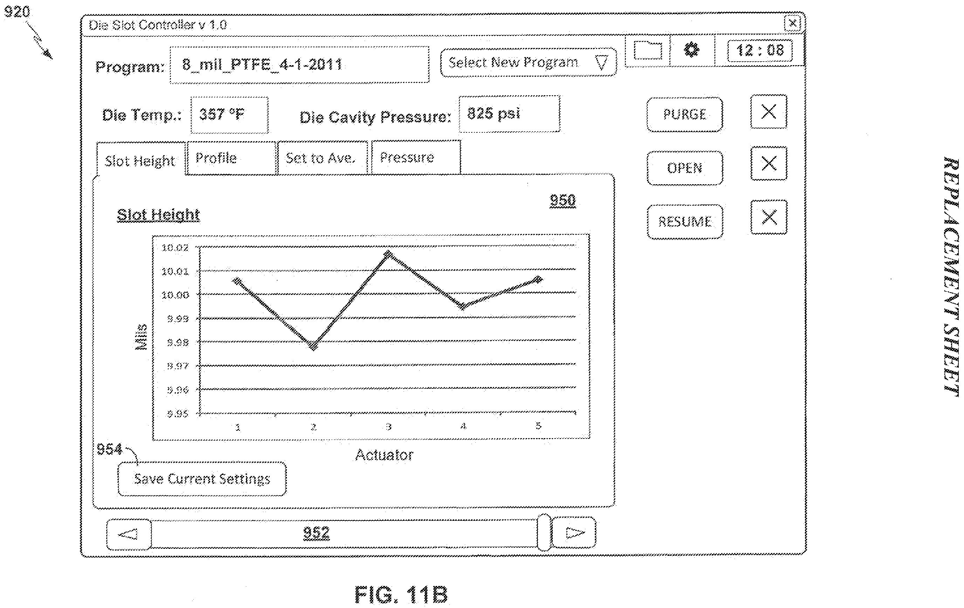

FIG. 11B illustrates slot height tab 950. Selection of slot height tab 950 displays a graph including an indication of slot height across a width of the die. The chart also displays an actuator number relative to the width of the slot height. In addition, slot height tab 950 includes a scroll bar 952, which may be used to view the slot height at different times. However, as shown in FIG. 11B, scroll bar 952 is in the most forward position, such that slot height tab 950 displays the current extrudate product profile and not a historical record of the extrudate product profile. Slot height tab 950 further includes selectable button, which may be used to save the current actuator settings for later retrieval.

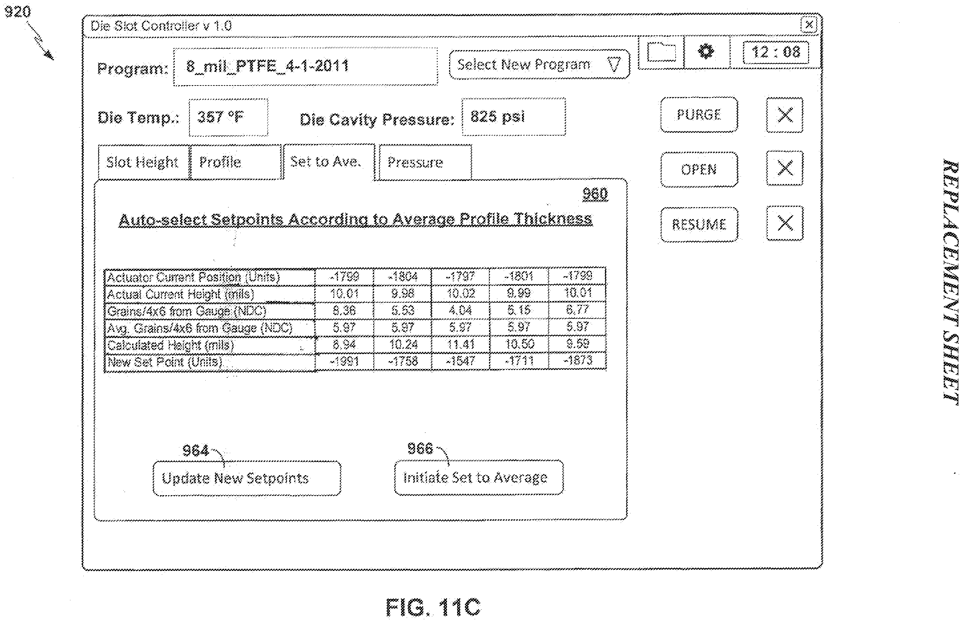

FIG. 11C illustrates auto-select average setpoint tab 960. Selection of auto-select average setpoint tab 960 displays a chart including the actuator position associated with each actuator of the slot die, the actual current height of the die slot corresponding to each actuator position, and the measured extrudate thickness by weight and height. In addition, auto-select average setpoint tab 960 includes a selectable update setpoint button 964. Selection of selectable update setpoint button 964 causes the controller to calculate new setpoints that will limit variability in the product profile. The new setpoints are then displayed in the chart of auto-select average setpoint tab 960. Selectable button 966 allows a user to then change the position of the actuators according to the calculated new setpoints.

Beyond the "Set to Average" functionality which aims for a uniform or flat coated/extruded profile, the controller 300 can be set to deliberately produce other useful profiles. For example, in some extrusion operations, you might desire a "dogbone" profile where the extruded sheet is thicker at the edges. This type of profile can provide more stability of the extruded curtain at the expense of having to slit off of the edges of the film before final use. A dogbone profile is also sometimes useful if tentering is contemplated downstream of the extrusion operation. Such a non-uniform profile is accomplished via the use of Equation 5. When setting the Preselected Profile Flat, then $t_i'$ is selected as the average of the measured profile of $t_i$ values. To set a non-uniform profile, $t_i'$ could be any desired different array of targets.

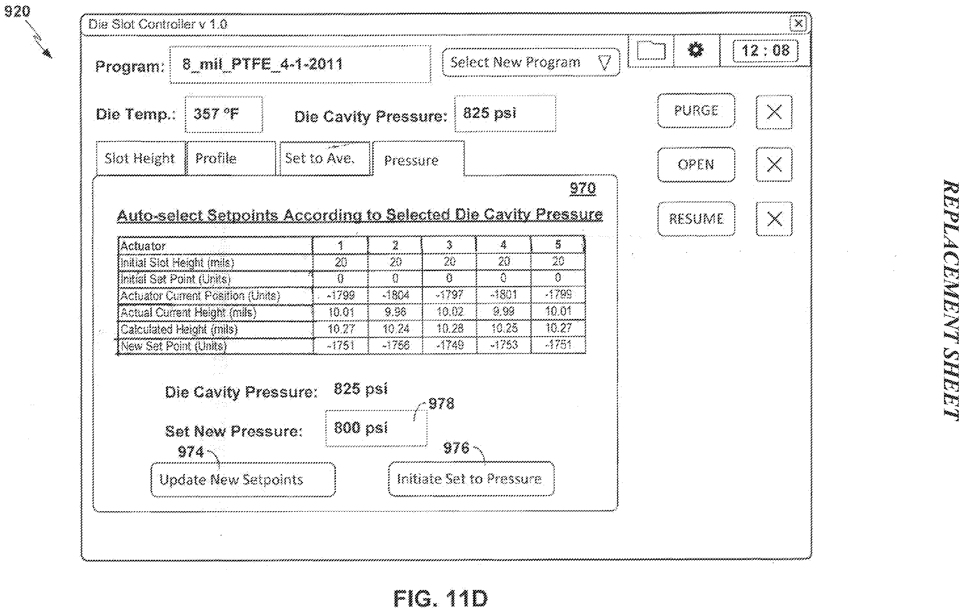

FIG. 11D illustrates auto-select pressure tab 970. Selection of auto-select pressure tab 970 displays a chart including the actuator position associated with each actuator of the slot die, the actual current height of the die slot corresponding to each actuator position, and the measured extrudate thickness by weight and height. In addition, auto-select pressure tab 970 includes a selectable update setpoint button 974. Selection of selectable update setpoint button 974 causes the controller to calculate new setpoints according to the pressure indicated in the "set new pressure" box 978. The new setpoints are then displayed in the chart of auto-select pressure tab 970. Selectable button 976 allows a user to then change the position of the actuators according to the calculated new setpoints.

In one example, in the control of the cross-web thickness profile in a coating or film extrusion operation, interaction matrices are a useful tool for translating input parameters to responses and vice-versa. One example is the bending of a die lip to achieve a particular slot gap profile that in turns creates a desired coating or film thickness profile. Typically, coating liquid is distributed across the width of a coating die via careful design of the flow geometry of the die manifold which consists of a die cavity connected to one or more die slots. Often the final die slot that the liquid passes through before exiting the die has a gap which can be varied by adjusting a plurality of actuators. The die lip on one side of the slot is movable by virtue of the actuators and a flexible design whereas the opposing die lip is usually fixed and relatively stiff. One or more of the lip actuators is moved which either decreases or increases the gap between the opposing lips in a local region around where the actuator is located. Sometimes, instead of an adjustable final gap, one of the other upstream slots is made adjustable by virtue of a separate adjustable member that forms one side of the slot, i.e. a choker bar.

Whether the adjustable gap is the final die slot or the choker bar slot, a knife coater, or other, this slot gap would be determined by measuring the slot gap at a multitude of cross-web positions, as represented by Equation 10.

$$h_i \equiv h(x_i), \; i = 1, N_m \qquad \textbf{(Equation 10)}$$

The value of the slot gap at these measurement points depends upon the positions of the die lip actuators, and so, with complete generality the functional form of this dependence can be represented by the following Taylor Series:

$$\mathbf{h(A)} = \mathbf{h_0(A_0)} + \left.\frac{\partial \mathbf{h}}{\partial \mathbf{A}}\right|_{\mathbf{A_0}} \bullet (\mathbf{A} - \mathbf{A_0}) + (\mathbf{A} - \mathbf{A_0}) \bullet \left.\frac{\partial^2 \mathbf{h}}{\partial \mathbf{A}^2}\right|_{\mathbf{A_0}} \bullet (\mathbf{A} - \mathbf{A_0}) + H.O.T.$$

$$\textbf{(Equation 11)}$$

In Equation 11, $\mathbf{h}$ is the vector of gap measurements, $\mathbf{A}$ is the vector of actuator settings, and $\mathbf{h_0}$ and $\mathbf{A_0}$ refer to an initial set of actuator settings and gap measurements. The length of $\mathbf{h}$ would be $N_m$, the number of measurement points, and the length of $\mathbf{A}$ would be the number of Actuators, $N_a$. The stiffness matrix, $\frac{\partial \mathbf{h}}{\partial \mathbf{A}}$, is a rank 2 $N_m$x$N_a$ matrix, whereas the Hessian matrix, $\frac{\partial^2 \mathbf{h}}{\partial \mathbf{A}^2}$, is rank 3 $N_a$x$N_m$x$N_a$ matrix. In some examples, the range of lip movement is generally within the range governed by linear elasticity such that that the Hessian matrix components and contributions from higher order terms are virtually zero. As a result, changes in the slot gap due to actuator position changes can be closely represented by the stiffness matrix alone, as represented by Equation 12.

$$(\mathbf{h} - \mathbf{h_0}) = \frac{\partial \mathbf{h}}{\partial \mathbf{A}} \bullet (\mathbf{A} - \mathbf{A_0}) \qquad \textbf{(Equation 12)}$$

The stiffness matrix has $N_m$x$N_a$ components, $\frac{\partial h_i}{\partial A_j}$, and physically represents the change in the slot gap at the measurement point, $x_i$, due to a change in the jth actuator position, $A_j$. If the die lip was infinitely flexible, almost all of the stiffness matrix components would be zero - only if the actuator position coincided with the measurement point would the stiffness matrix component be nonzero. If the measurement points are at the same locations as the actuators, in this scenario the stiffness matrix becomes diagonal, as represented by Equation 13.

$$\mathbf{K} \equiv \frac{\partial \mathbf{h}}{\partial \mathbf{A}} = k\mathbf{I} = k\delta_{ij} \qquad \text{(Equation 13)}$$

In Equation 13, k is a proportionality constant that converts actuator position changes to slot gap changes and is the same for each actuator. But, real die lips are not "infinitely flexible and a change in an individual actuator changes the slot gap in a region around the actuator location. How far this region of influence extends is reflected in how far from the diagonal nonzero components appear in the stiffness matrix. In this way, the lip stiffness matrix incorporates in its components all interactions between actuator movements and slot gap changes across the entire width of the die.

Experimentally measuring the stiffness matrix of a die lip can be accomplished by finite differencing. The difference between slot gap measurements across the die slot width when each actuator is independently displaced provides the rows of the stiffness matrix. For example, centered differencing would proceed as follows:

$$K_{ij} \cong \frac{h_i\left(\mathbf{A}_0 + \Delta_j\right) - h_i\left(\mathbf{A}_0 - \Delta_j\right)}{2\Delta_j} \qquad \text{(Equation 14)}$$

In Equation 14, $\Delta_j$ implies that all actuators are at their initial locations except for the jth actuator which is displaced a distance $\Delta$ in first the positive direction followed by displacement in the negative direction. The difference between the slot gap measurements at these two settings relative to the displacement magnitude provides a centered difference approximation to the stiffness matrix components. Centered differencing in this fashion offers higher accuracy than forward or backward differencing but does require twice as many measurements. Additional measurements at different displacements would allow the use of higher order differencing techniques, but centered differencing affords reasonable accuracy with limited effort.

Numerical differencing theory suggests that there is an optimal displacement magnitude that should be used in centered differencing to produce the most accurate stiffness matrix entries, (Richard L. Burden et al., Numerical Analysis 131 - 133 (2nd ed. 1981).The error implicit in centered differencing is second order accurate in the displacement size, i.e., is proportional to the displacement squared. But the slot gap measurements have an uncertainty associated with them so when both of these errors are accounted for, the optimal choice of $\Delta$ is:

$$\Delta_{opt} = \sqrt[3]{\frac{3\Delta h}{M}} \qquad \text{(Equation 15)}$$

In Equation 15, $\Delta h$ is the slot gap measurement error and M is an upper bound to the third derivative of the gap-actuator relationship, $\frac{\partial^3 h}{\partial A^3}$. But since M may be hard to estimate, Equation 15 provides guidance rather than a true optimal value.

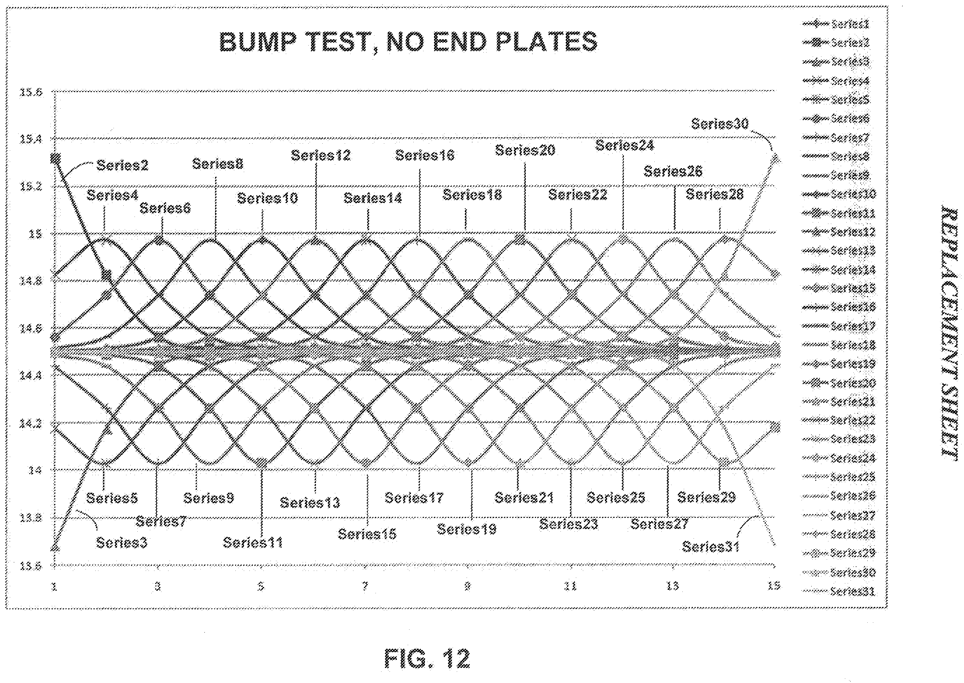

FIG. 12 displays slot gap measurements (i.e. "Bump" test) for individual actuator displacements which were used to calculate the stiffness matrix entries for a die according to Equation 14. Specifically, FIG. 12 illustrates how moving each actuator changes the slot die heights across the entire die slot.

Actuator displacements that corresponded to roughly a 1 mil change in the slot gap were used. Apparent in the graph is the interaction between actuators - an actuator position change produced a slot gap change as far as 2 neighboring actuators distant. This produces a lip stiffness matrix with significant nonzero components along 5 diagonals of the matrix - the main diagonal plus 2 diagonals on either side.

The stiffness matrix determined in this way - i.e., applying Equation 14 to the slot gap measurements displayed in FIG. 12 - can be used in two ways. First, for any set of actuator settings, the resulting slot gap profile can be computed by multiplying the stiffness matrix with the actuator displacements:

$$\left(\mathbf{h} - \mathbf{h}_0\right) = \mathbf{K} \bullet \left(\mathbf{A} - \mathbf{A}_0\right) \qquad \text{(Equation 16)}$$

Secondly, the actuator settings that will result in a specified slot gap profile are calculated through the inverse of the stiffness matrix:

$$(\mathbf{A} - \mathbf{A}_0) = \mathbf{K}^{-1} \bullet (\mathbf{h} - \mathbf{h}_0) \qquad \text{(Equation 17)}$$

Since the gap-actuator relationship is strongly linear - i.e., the Hessian matrix components in equation (Equation 11) have a value of virtually zero - the choice of the initial gap and actuator positions ($\mathbf{h}_0$ and $\mathbf{A}_0$) is arbitrary.

EXPERIMENTAL METHODOLOGY

As mentioned previously, the "Bump" test was used to produce FIG. 12, i.e., to experimentally determine how the movement of each actuator effects the entire cross-web profile of a die slot. As represented in FIG. 12, the "Bump" test was performed for each actuator on the extrusion die.

First, the die slot is set to a flat initial slot (condition 1) using manual adjustment of the actuators.

Next, each actuator was individually bumped (moved) +/-200 Actuator Units. In the actual experiment, 1 Actuator Unit equaled 0.18 micron movement of the actuator shaft. The test was done with no end plate seals installed on the die. FIG. 12 shows the actual actuator set-point recipes derived from the bump testing for each of the 31 die slot gap profiles measured.

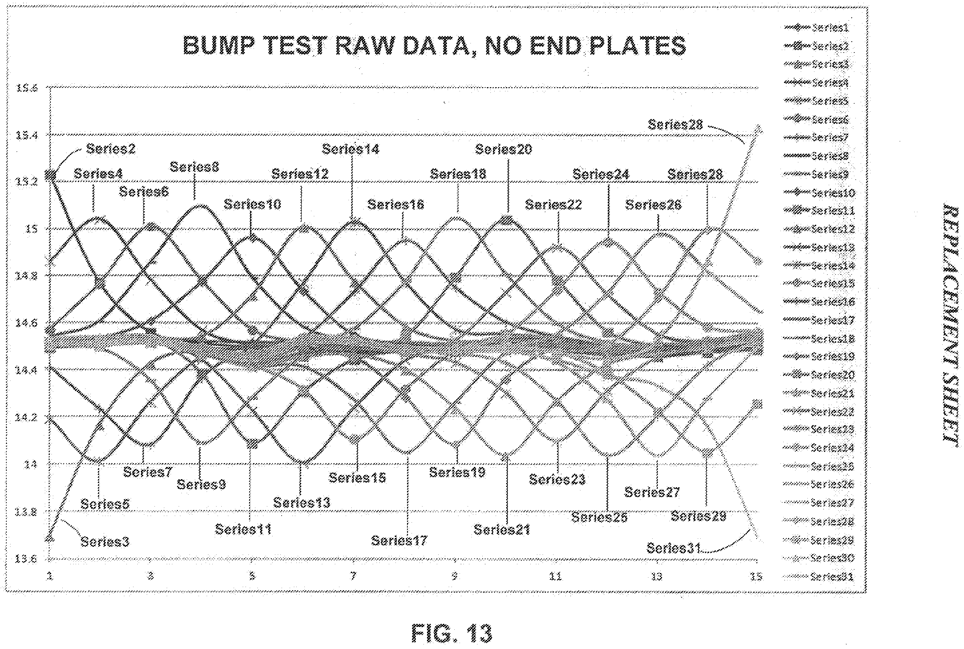

In contrast to FIG. 12, FIG. 13 illustrates the raw data measured from the bump test. As shown in FIG. 13, there is some variation to the actuator response to the bump test between actuators. The raw data of FIG. 13 was normalized to create the response output shown in FIG. 12. There may be any number of techniques used to normalize raw data from a bump test in order to produce a more accurate interaction matrix than provided by the bump test itself. One such technique is described below.

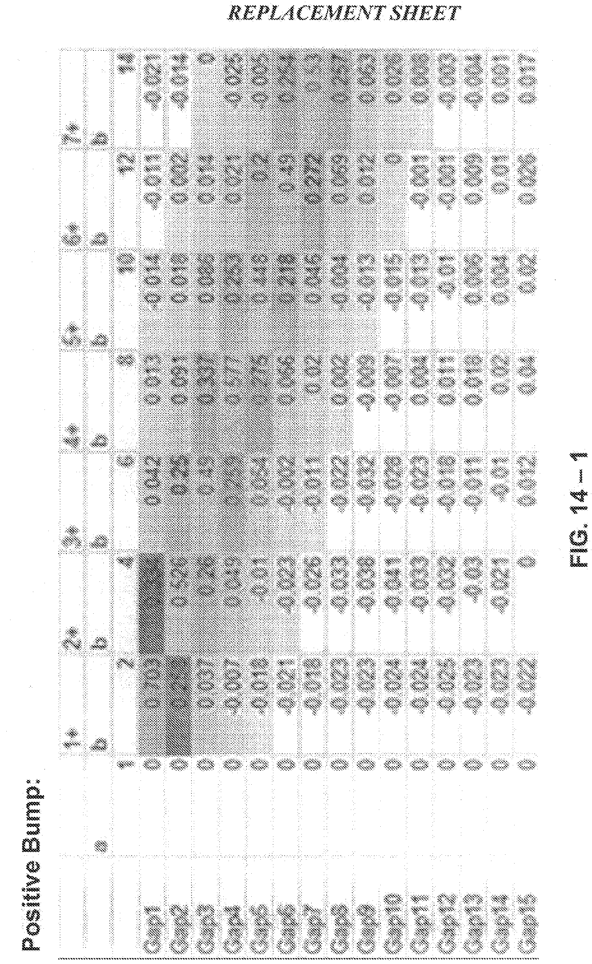

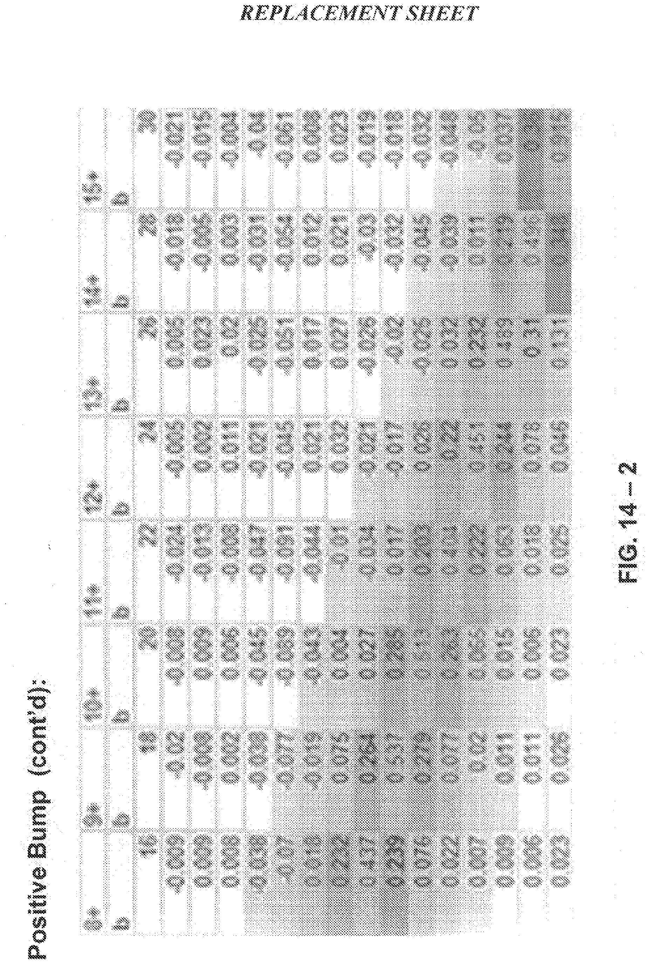

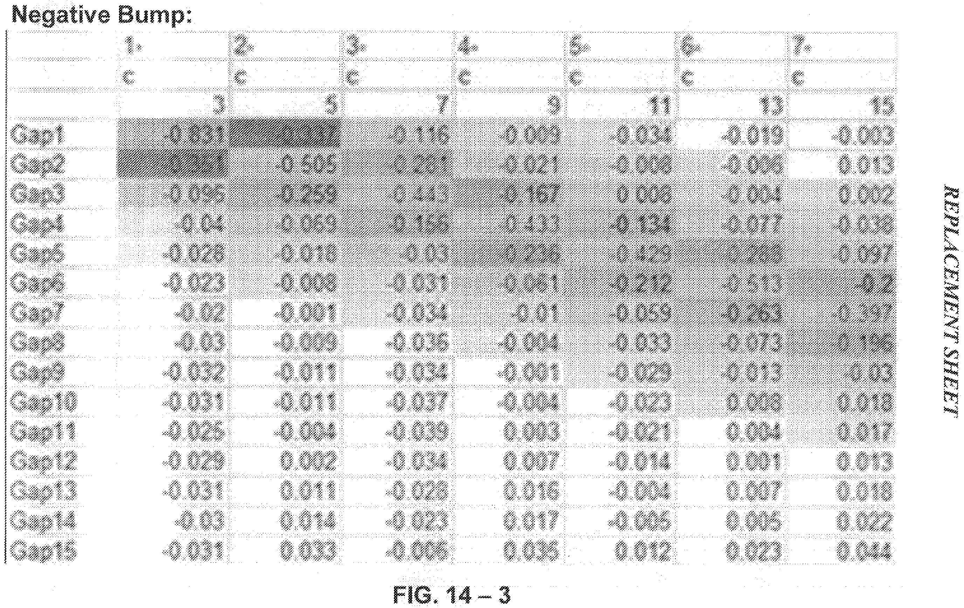

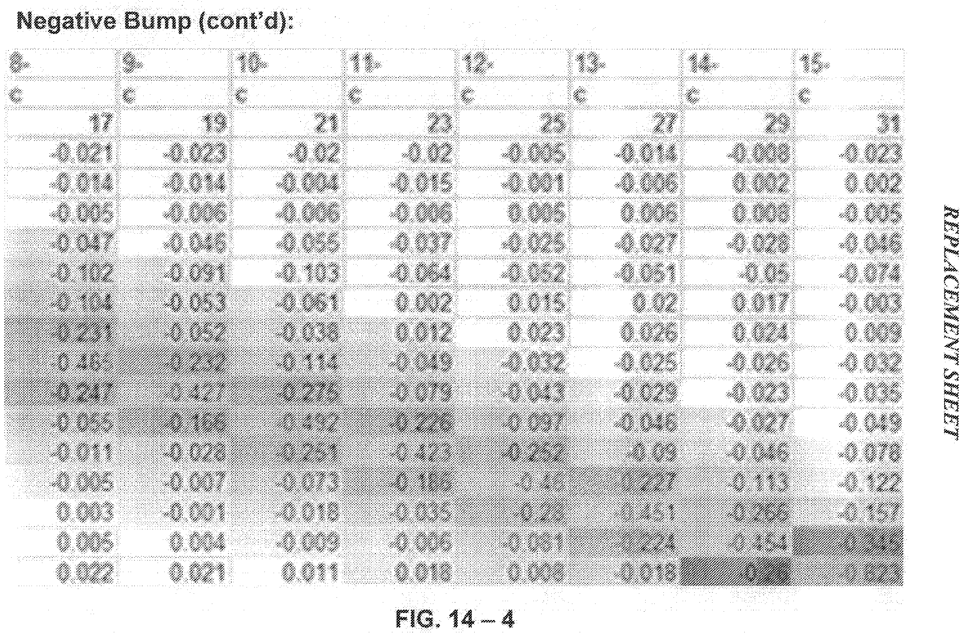

First the raw data representing displacement of the die slot from individually bumping each actuator is used to populate an interaction matrix. The data of this interaction matrix is graphically represented as FIG. 13. FIG. 14 illustrates the actuator position (in actuator units) used to determine the change in actuator position during the bump test. The data shown in FIG. 14 may be converted to represent a die slot gap profile using the known, actuator positions and known die slot gap profile prior to the bump testing and using the known relationship between actuator units and movement of the actuator shaft, e.g., as previously mentioned, 1 actuator unit equaled 0.18 micron movement of the actuator shaft. Thus, the changes in actuator position can readily be used to measure the die slot gap profile.

This experimental data may then be refined to produce the interaction matrix graphically represented by FIG. 12. Looking at the raw data in view of the logical similarities between actuator, one can utilize the power of averaging to remove some of the noise from the data set and calculations.

The matrices can then be incorporated into a die control system in order to adjust the die slot height to provide desired material profiles.

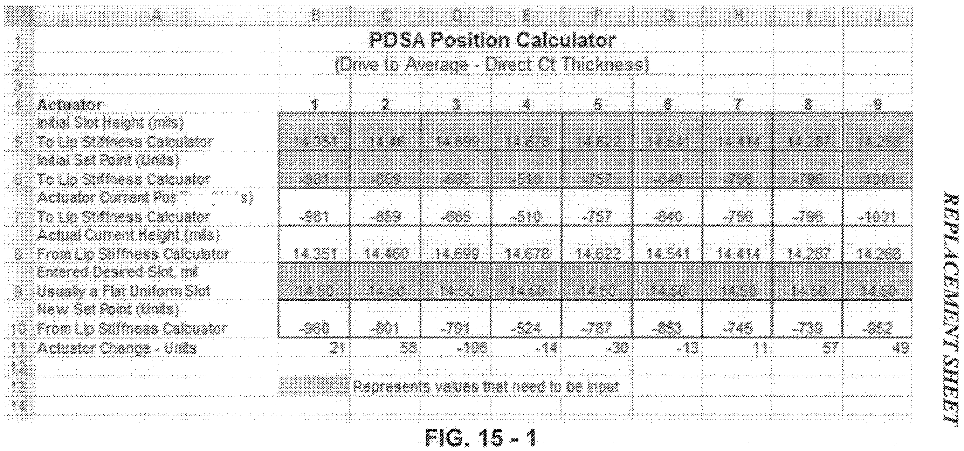

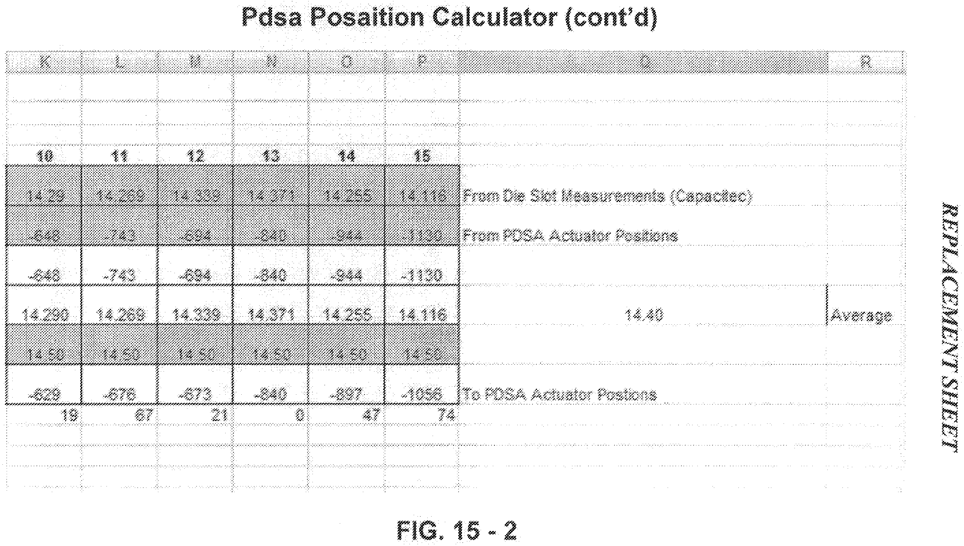

In one example, the matrices are incorporated into workbook as represented by FIG. 15. This can be used in multiple ways. If a current "datum" slot is known, i.e. the fifteen different actuator positions and the measured die slot height are known, then the interaction matrix can be used to calculate new actuator set points for any desired slot gap profile. Further, if the desired slot is a new refined flat slot, simply take the die slot measurement and enter the current actuator positions and die slot measurements in row 5 and 6 of FIG. 15. The desired flat slot may be entered in row 9. The workbook then provides the new actuator set points in row 10. In some examples, the workbook functionality may in incorporated into a die controller, e.g., as discussed with respect to FIGS. 11. Thus, the interaction matrix for a die may be utilized to select actuator adjustments in order to provide a desired die slot profile.

FLOW SENSITIVITY MATRIX TECHNIQUES

While the lip stiffness matrix effectively translates actuator positions to slot gap profiles and vice-versa, there is another interaction matrix that is potentially more useful in profile control activities. This matrix would be the flow sensitivity matrix which translates slot gap profiles to cross-web coating or film thickness profiles and vice-versa. It incorporates interactions between the adjustable slot gap and the rest of the die manifold flow geometry as well as flow interactions in the coating bead flow that the liquid experiences downstream of the die manifold. Following Equation 11, the dependence of the coating thickness profile on the slot gap can be expressed by a similar Taylor's Series:

$$t(\mathbf{h}) = t_0(\mathbf{h}_0) + \frac{\partial t}{\partial \mathbf{h}}\bigg|_{\mathbf{h}_0} \bullet (\mathbf{h} - \mathbf{h}_0) + (\mathbf{h} - \mathbf{h}_0) \bullet \frac{\partial^2 t}{\partial \mathbf{h}^2}\bigg|_{\mathbf{h}_0} \bullet (\mathbf{h} - \mathbf{h}_0) + H.O.T.$$

$$\textbf{(Equation 18)}$$

Here **t** is the vector of cross-web coating or film thickness measurements. But in contrast to the lip stiffness matrix, in this case the Hessian matrix components are not near zero and the higher order terms have significant magnitude. Or to put this concept alternatively, consider the linear approximation analogous to Equation 12:

$$(t - t_0) \cong \frac{\partial t}{\partial \mathbf{h}}\bigg|_{\mathbf{h}_0} \bullet (\mathbf{h} - \mathbf{h}_0) \qquad \textbf{(Equation 19)}$$

The accuracy of the output of Equation 19 depends on the conditions for which the flow sensitivity matrix, $\frac{\partial t}{\partial \mathbf{h}}\bigg|_{\mathbf{h}_0}$, was calculated. These processing conditions would include mainly the slot gap and film drawdown, but may also include coating speed, temperature, etc. Despite these inherent nonlinearities, the local approximation to the flow sensitivity matrix is still useful in cross-web profile control algorithms. It can be approximated in a procedure similar to Equation 14, but instead of direct experimental measurements, flow model predictions can be effectively used in the differencing formulas.

$$\mathbf{S} \equiv \frac{\partial t}{\partial \mathbf{h}}; \; S_{ij} = \frac{\partial t_i}{\partial h_j} \approx \frac{t_i(\mathbf{h} + \Delta_j) - t_i(\mathbf{h} - \Delta_j)}{2\Delta_j} \qquad \textbf{(Equation 20)}$$

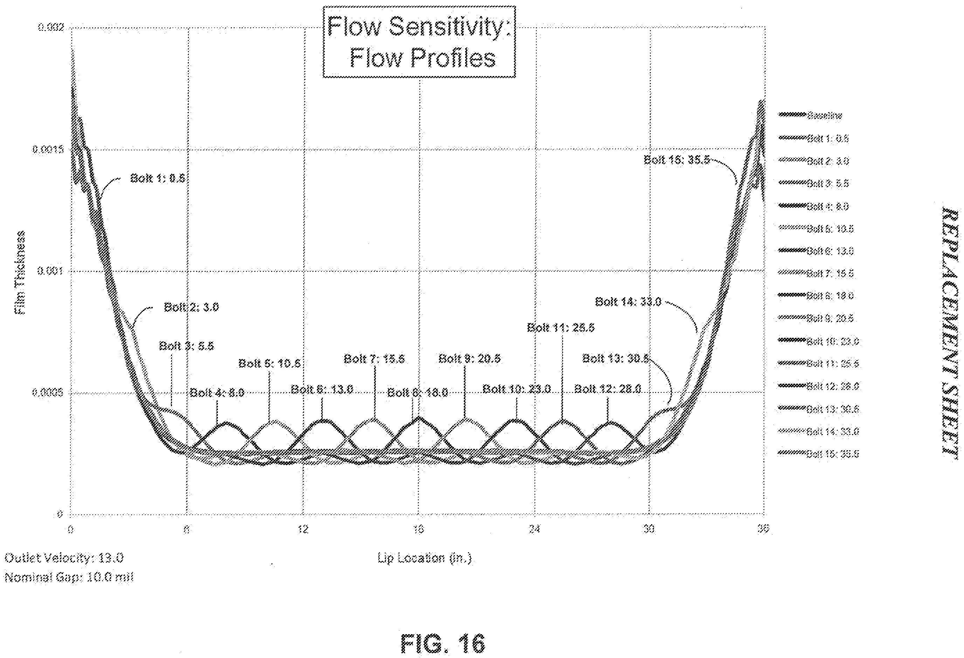

FIG. 16 shows examples of final film thickness profiles calculated from combination of die manifold flow and film drawdown first principles' models. Shown there is a baseline profile together with profiles computed when the slot gap is displaced at each actuator location. The edges of the film are thicker due to the film "neck-in" and the flow sensitivity to actuator changes is amplified there, but the comparison in the middle of the film display consistent interactions of the film thickness with gap changes at those actuator locations. In each case, the film thickness location is translated to the lip location where that material emerged.

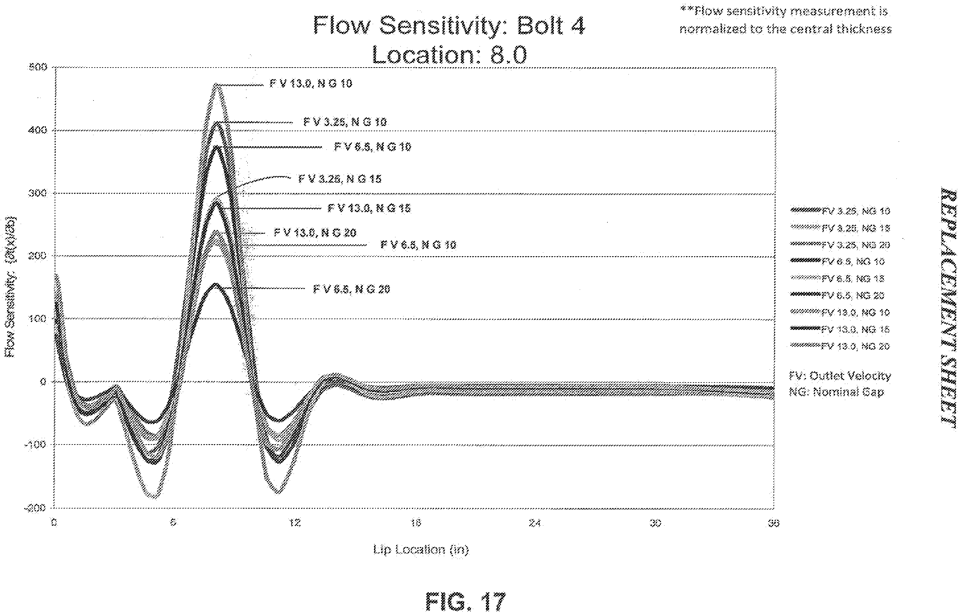

Because of flow nonlinearities, the flow sensitivity matrix changes depending on the current processing conditions. This is represented in FIG. 17, which compares thickness profiles for a particular actuator gap change under different process conditions. FIG. 17 represents calculation of the flow sensitivity changes for a particular actuator for different process conditions. In the example of FIG. 17, thickness profile changes for final slot gaps of 10, 15, and 20 mils are shown together with web speeds of 16.25, 32.5, and 65 fpm. The shape of the thickness profile change is similar but the magnitude changes depending on slot gap and film drawdown magnitude. As a result, the flow sensitivity matrix that corresponds to current process conditions should be the one used for control purposes. That is, either flow sensitivity matrices should be computed "just in time" or a number of them should be pre-computed for different process conditions and an interpolation scheme utilized.

GAUSS-NEWTON PROFILE CONTROL STRATEGY

As an illustration of how the flow sensitivity matrix can be used in a profile control strategy, let's consider a Gauss-Newton strategy for controlling the coating thickness profile to its desired state. That is, minimizing the following objective function should lead to the actual coating profile matching its desired form:

$$F \equiv \frac{1}{N} \sum_{i=1}^{N} \left[ \frac{t_{actual}(x_i, b_j) - t_{desired}(x_i)}{\langle t \rangle} \right]^2, \; x_i \in e \le x \le W - e \qquad \textbf{(Equation 21)}$$

In Equation 21, $t_{actual}$ represents thickness profile measurements (N in total) at the cross-web positions, $x_i$, and

$t_{desired}$ is the desired thickness which may or may not be position-dependent. The observed thickness profile depends on the positions of the $N_a$ actuators, $b_j$ (analogous to $h_j$ above), and the cross-web position is mapped from the actual measurement point to the actuator location where the coating emerged from the die. A characteristic value of the coating thickness, $\langle t \rangle$, is used to scale the objective function. This characteristic value could be an average cross-web thickness or a value at a particular cross-web position. Also incorporated into the objective function is the possibility that thickness measurements in the edge bead may be discounted. That is, if $x_i$ is within the edge bead (of width e) its value does not contribute to the objective function.

In order to control the thickness profile to its desired state, we require that the gradient of the objective function with respect to each actuator position vanishes:

$$\frac{\partial F}{\partial b_j} = 0 = \frac{2}{N} \sum_{i=1}^{N} \left[ \frac{t_{actual}(x_i, b_j) - t_{desired}(x_i)}{\langle t \rangle} \right] \frac{1}{\langle t \rangle} \frac{\partial t_{actual}}{\partial b_j} \qquad \textbf{(Equation 22)}$$

According to the Gauss-Newton method, a Newton's method style correction is applied to the current actuator positions to achieve improved actuator positions in a way that discounts second order dependencies, i.e., $\frac{\partial^2 t_{actual}}{\partial b_j^2}$ is ignored:

$$\mathbf{b}^{(p)} = \mathbf{b}^{(p-1)} - \left[ \frac{\partial^2 F}{\partial b_j \partial b_k} \right]^{-1} \bullet \frac{\partial F}{\partial b_k}; \text{ (summations implied)} \qquad \textbf{(Equation 23)}$$

Of key interest here is the Hessian of the objective function whose components are as follows:

$$\frac{\partial^2 F}{\partial b_j \partial b_k} = \frac{2}{N \langle t \rangle^2} \sum_{i=1}^{N} \frac{\partial t_{actual}}{\partial b_j} \frac{\partial t_{actual}}{\partial b_k}. \qquad \textbf{(Equation 24)}$$

Note that this Hessian is essentially the inner product of the flow sensitivity matrix and is a $N_a \times N_a$ square matrix. It incorporates the physical interactions of how actuator movements influence the cross-web coating profile. If there were no interactions between neighboring actuators on the flow profile, this Hessian matrix would be diagonal. The number of non-zero off-diagonal components in the Hessian matrix indicates the degree of interaction between the actuators.

EXAMPLE: GAUSS-NEWTON PROFILE CONTROL STRATEGY

An extrusion die was utilized to extrude a polycarbonate film uniformly. An exemplary method was utilized to attain a flat final extruded profile of the PC film. The extruded film caliper (thickness) profile was measured via a beta radiation thickness gauge. For each caliper material, the die slot height was initially set to a uniform 14.5 mil (0.0145 inch = 368 micron) as shown. Then, the die slot was adjusted by separately modeling fluid flow at each actuator and determining position adjustments for each actuator based on the modeled fluid flow associated with that actuator.

Modeling the flow may make use of any appropriate models characterizing fluid rheology. For this example, we used the simple model for a power law fluid, where the relationship between flow in the slot and the slot geometry is given by the equation:

$$\frac{Q}{W} = \frac{nB^2}{2(1+2n)} (BP/2KL)^{1/n} \qquad \textbf{(Equation 25)}$$

In Equation 25, Q/W is the flow per unit width, B is the slot height, P is pressure, L is the slot length (corresponding to the die width), n is the power law index and K is the coefficient for power law viscosity. A Newtonian constant viscosity fluid has n=1 and K is then the numerical viscosity.

As another example, slot uniformity can be characterized by the uniformity of the walls of the slot. If each slot has a Total Indicated Runout or TIR of 2t, then the percent uniformity of the flow from the slot is then:

$$\% = 100\left((B+t)^{(2+1/n)} - (B-t)^{(2+1/n)}\right)/B^{(2+1/n)} \qquad \textbf{(Equation 26)}$$

For a constant viscosity (Newtonian) fluid, this means that the coating uniformity goes as the cube of the slot height (B). This relationship is shown as Equation 27.

$$\% \ Coat \ Uniformity = 100\left((B_{MAX})^3 - (B_{MIN})^3\right)/B_{AVG}^3 \qquad \textbf{(Equation 27)}$$

While Equation 27 may not be directly used to predict slot settings because. Equation 27 may not account for all details including details related to the extrusion flows, materials, to the die design itself. However, Equation 27 demonstrates the importance for providing a precisely tuned thickness across the width of the die. In particular, Equation 27 demonstrates that any variations in the thickness of the fluid flow path are magnified in the resulting cross-web profile of the extruded product.

Equation 25 may, for example, be used to predict a die slot change because, according to the techniques disclosed herein, the position of the actuator, and by inference the die slot thickness B, is known in combination with the desired extrudate target thickness, the current measured extrudate thickness. Previously, knowing the absolute position of the die slot thickness during an extrusion process has not been possible, e.g., due to the backlash in differential bolts. Using the known target thickness and the measured extruded product thickness profile, Equation 25 can predict an appropriate die slot change. For example, as we know by inference the relationship between die slot thickness profile and extruded product thickness profile from the known die slot thickness profile and the measured extruded product thickness profile and can thus predict a slot thickness profile to obtain the target thickness profile.

Assuming that other elements of the flow path are of less importance, for a Newtonian fluid, the predicted slot thickness corresponding to actuator "i", $B'_i$ is calculated as shown in Equation 28.

$$B'_i = \left(\frac{t'_i}{t_i}\right)^{1/3} B_i$$

$$\textbf{(Equation 28)}$$

For a Power Law fluid, Equation 28 may be represented as Equation 29.

$$B'_i = B_i \left(\frac{t'_i}{t_i}\right)^{\left(1/2 + \frac{1}{n}\right)}$$

$$\textbf{(Equation 29)}$$

In these examples, we used a Power Law index of 1.0.

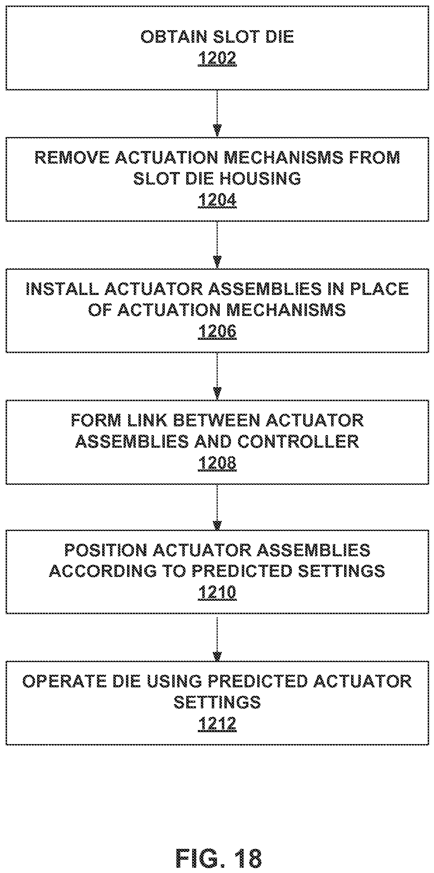

FIG. 18 illustrates techniques for retrofitting a slot die with actuator assemblies, such as a set of actuator assemblies 200 (FIG. 4). In different examples, the techniques of FIG. 18 may be utilized for a film slot die, a multi-layer slot die, a hot melt extrusion coating die, a drop die, a rotary rod die, an adhesive slot die, a solvent coating slot die, a water-based coating die, a slot fed knife die or other slot die.

First, a slot die is obtained (1202). The slot die includes an applicator slot extending about a width of the slot die and a plurality of actuation mechanisms spaced about the width of the slot die. The applicator slot is in fluid communication with a fluid flow path through the slot die. Each actuator in the plurality of actuation mechanisms is operable to adjust a cross-directional thickness of the fluid flow path at its respective location to provide an adjustment of fluid flow through the applicator slot. The slot die may be operated using the plurality of actuation mechanisms to control a thickness of a fluid flow path across a width of the slot die.

In different examples, the actuation mechanisms include one or more of the following: thermally-adjustable bolts, differential bolts, piezo-electric actuators, pneumatic actuators; and/or hydraulic actuators. In one example, the actuation mechanisms include thermally-adjustable bolts and the technique for retrofitting a slot die with thermally-adjustable bolts may include evaluating the cross-web profile of the extrudate after it exits the applicator slot and adjusting the relative position of one or more of the actuation mechanisms with its respective thermally-adjustable bolt such that the cross-web profile of the extrudate after it exits the applicator slot more closely conforms to a preselected cross-web profile.

Next, the actuation mechanisms are removed from the die housing (1204). A plurality of actuator assemblies, such as actuator assemblies 200, are installed in place of the actuation mechanisms (1206). Each actuator assembly in the plurality of actuator assemblies is operable to adjust a cross-directional thickness of the fluid flow path at its respective location to provide a local adjustment of fluid flow through the applicator slot.

Next, a controller, such as controller 300, is obtained and a communication link is formed between each actuator assembly and the controller (1208). The controller is configured to set the position of each actuator assembly according to one of a plurality of discrete settings, such as measured position of sensor 230 and/or a stepper motor setting for motor 210.

Using fluid dynamics and a digital model of the slot die, controller 300 predicts a set of discrete settings from the plurality of discrete settings corresponding to a preselected die cavity pressure. In different examples, controller 300 may retrieve the preselected die cavity pressure from a non-transitory computer readable medium or may receive the preselected die cavity pressure from a user input.

In different examples, the predicted setting may correspond to measurements from sensor 230 and/or discrete position settings for motor 210. Sensor 230 may provide more precise position information to controller 300 than that provided by the motor 210. For this reason, controller may predict settings for an actuator assembly 200 based on measurements from sensor 230 and may operate motor 210 to locate output shaft 222 according to the predicted setting rather than directly driving motor 210 to a number of step corresponding to the predicted position.

Fluid dynamics, known fluid properties of the extrudate, and a digital model of a die allows controller 300 to predict discrete settings for the actuator assemblies. Modeling of an extrudate flowing through a die may incorporate many aspects of the die itself including applicator slot width, a distance from the manifold cavity to the exit of the applicator slot, and a slot thickness, which is the narrow dimension of the applicator slot between the two parallel surfaces defining the slot itself.

Any number of equations may be used to predict the settings for the actuator assemblies, and the predicted settings may correspond to, e.g., a preselected cross-web profile and/or a preselected die cavity pressure. For example, predicting settings for the actuator assemblies may include modeling heat transfer and thermal dissipation throughout the slot and the extrudate. In other examples, predicting the setting for the actuator assemblies may incorporate a stiffness matrix and/or a flow sensitivity matrix.

Once controller 300 predicts the settings for actuator assemblies 200 in slot die 10 corresponding to the preselected die cavity pressure, the slot die is operated by passing an extrudate through the fluid flow path and out the applicator slot with the actuator assemblies positioned according to the set of predicted settings (1212).

The techniques described in this disclosure, such as techniques described with respect to controller 300, may be implemented, at least in part, in hardware, software, firmware or any combination thereof. For example, various examples of the techniques may be implemented within one or more microprocessors, digital signal processors (DSPs), application specific integrated circuits (ASICs), field programmable gate arrays (FPGAs), or any other equivalent integrated or discrete logic circuitry, as well as any combinations of such components, embodied in controllers, user interfaces or other devices. The term "controller" may generally refer to any of the foregoing logic circuitry, alone or in combination with other logic circuitry, or any other equivalent circuitry.

When implemented in software, the functionality ascribed to the systems and controllers described in this disclosure may be embodied as instructions on a computer-readable storage medium such as random access memory (RAM), read-only memory (ROM), non-volatile random access memory (NVRAM), electrically erasable programmable read-only memory (EEPROM), FLASH memory, magnetic media, optical media, or the like. The instructions may be executed to cause one or more processors to support one or more examples of the functionality described in this disclosure.

In different examples, this disclosure is directed to creation of a stiffness matrix for translating Slot Position and Actuator Position and vice-versa. For example, as described herein different examples include: using experimental methods such as a "bump" test to create a stiffness matrix, a bump test where the number of profile measurements is equal to number of actuators, a bump test where the number of profile measurements is arbitrary, and using modeling methods to create a stiffness matrix.

In further examples, this disclosure is directed to using a stiffness matrix to calculate the slot height profile based on actuator positions.

In further examples, this disclosure is directed to using a stiffness matrix to calculate desired actuator positions based on a desired slot height profile.

In further examples, this disclosure is directed to using a stiffness matrix and inverse stiffness matrix for translating slot height and actuator position and vice-versa as a preferred mode of advanced automated extrudate profile control using fluid

In further examples, this disclosure is directed to creating a flow sensitivity matrix that translates slot gap profiles to cross-web coating or film thickness profiles and vice-versa. The flow sensitivity matrix may incorporates interactions between the adjustable slot gap and the rest of the die manifold flow geometry as well as flow interactions in the coating bead flow that the liquid experiences downstream of the die manifold.

In further examples, this disclosure is directed to using the flow sensitivity matrix in a profile control strategy such as a Gauss-Newton strategy for controlling the extrudate profile, such as a coating thickness profile, to its desired state. In some examples, a matrix of sensitivities of thickness to actuator movement is rectangular. Under the simpler AAPC method with one flow equation per band, the matrix would be square and be diagonal. In the more general flow sensitivity matrix case, a model would provide this matrix (may want to input several matrices and interpolate or be able to scale the matrix)

In some examples, a digital model interface can do both matrix multiplication and inversion, such that the only input needed is the flow sensitivity matrix.

In some examples, constraints can be added either to constrain actuator movement or to maintain constant pressure, e.g., via an augmented matrix or a penalty method, etc.

In further examples, this disclosure is directed techniques for controlling actuators to provide an extrudate profile with a non-uniform thickness, i.e., controlled edge beads, stripes, etc.

In further examples, this disclosure is directed techniques including adjusting the actuator datum to compensate for thermal deflection of the die.

Various examples have been described.


**Claims**

**1.** A system comprising:

a slot die (10), wherein the slot die (10) includes:

an applicator slot (6) extending about a width of the slot die (10), wherein the applicator slot (6) is in fluid communication with a fluid flow path through the slot die (10),
a plurality of actuators (200) spaced about the width of the slot die (10), wherein each actuator in the plurality of actuators (200) is operable to adjust a cross-directional thickness of the fluid flow path at its respective location to provide a local adjustment of fluid flow through the applicator slot (6); each actuator (200) including a measurement instrument, each measurement instrument being configured to provide a local measurement of the slot die (10), the local measurement corresponding to the cross-directional thickness of the fluid flow path at the location of the respective measurement instrument; and

a controller (300) configured to set the position of each actuator (200) according to one of a plurality of discrete settings for operation of the slot die (10),
a sensor configured to directly measure the thicknesses of the extruded product at a multiple cross-web locations;
**characterised in that**,
the controller (300) is further configured to, using fluid dynamics and a digital model of the slot die (10), predict a set of discrete settings from the plurality of discrete settings corresponding to a preselected cross-web profile for the extrudate, and
wherein the controller (300) is further configured to:

evaluate the cross-web profile of the extrudate after it exits the applicator slot (6) according to measurements of the extruded product;
based on the evaluation of the cross-web profile, determine whether adjustments to the predicted set of discrete settings may provide a cross-web profile of the extrudate after it exits the applicator slot (6) that more closely matches the preselected cross-web profile;
after determining adjustments to the predicted set of discrete settings may provide a cross-web profile of the extrudate after it exits the applicator slot (6) that more closely matches the preselected cross-web profile, predict an improved set of discrete setting from the plurality of discrete settings corresponding to the preselected cross-web with the controller (300); and

reposition the actuators (200) according to the improved predicted set of discrete settings during the continued operation of the slot die (10) by passing the extrudate through the fluid flow path and out the applicator slot (6).

**2.** The system of claim 1, wherein using fluid dynamics and the digital model of the slot die (10) to predict the set of discrete settings from the plurality of discrete settings corresponding to the preselected cross-web profile for the extrudate comprises:
separately modeling fluid flow at each actuator (200) and determining position adjustments for each actuator (200) based on the modeled fluid flow associated with that actuator. (200)

**3.** The system of any of claims 1 - 2, wherein predicting the set of discrete settings from the plurality of discrete settings corresponding to the preselected cross-web profile for the extrudate comprises using a flow sensitivity matrix in a profile control strategy for controlling the coating thickness profile to its desired state.

**4.** The system of claim 3, wherein the profile control strategy includes a Gauss-Newton strategy.

**5.** The system of any of claims 3 - 4, wherein the flow sensitivity matrix represents flow sensitivity across the width of the slot die (10) versus actuator position adjustment for each of the plurality of actuators (200).

**6.** The system of any of claims 1 - 5, wherein the controller (300) is further configured to present the predicted set of discrete settings to a user via a user interface (320).

**7.** The system of any of claims 1 - 6, wherein the controller (300) is further configured to set each of the plurality of actuators (200) according to the predicted set of discrete settings during operation of the slot die (10).

**8.** The system of any of claims 1 - 7, wherein the controller (300) is further configured to retrieve the preselected cross-web profile from a non-transitory computer readable medium.

**9.** The system of any of claims 1 - 8, wherein the controller (300) is further configured to receive the the preselected cross-web profile from a user input.

**10.** The system of any of claims 1 - 9, wherein the controller (300) is further configured to, when positioning each of the actuators (200) with the controller (300) according to the set of discrete settings includes monitoring, monitor the local measurements from the measurement instruments in the plurality of measurement instruments and, for each of the actuators (200), adjust the relative position of the actuator until the actuator (200) provides the absolute cross-directional thickness of the fluid flow path at the respective location of the actuator (200) defined by the set of discrete settings.

**11.** The system of claim 10,
wherein the slot die (10) further includes a choker bar,
wherein the plurality of actuators (200) are attached to the choker bar about a width of the choker bar, and
wherein each of the actuators (200) is operable to control the thickness of the fluid flow path at its location by providing a local adjustment of the position of the choker bar within the fluid flow path.

**12.** The system of claim 10, wherein each actuator in the plurality of actuators (200) is operable to adjust a cross-directional thickness of the applicator slot (6) at its respective location to provide the local adjustment of fluid flow through the applicator slot (6).

**Patentansprüche**

**1.** Ein System, umfassend:

eine Schlitzdüse (10), wobei die Schlitzdüse (10) aufweist:

einen Applikatorschlitz (6), der sich um eine Breite der Schlitzdüse (10) erstreckt, wobei der Applikatorschlitz (6) durch die Schlitzdüse (10) in Fluidverbindung mit einem Fluidströmungsweg in Fluidverbindung steht, eine Mehrzahl von Stellgliedern (200), die in einem Abstand um die Breite der Schlitzdüse (10) angeordnet sind, wobei jedes Stellglied in der Mehrzahl von Stellgliedern (200) betriebsfähig ist, um eine Querrichtungsdicke des Fluidströmungswegs an ihrer jeweiligen Position anzupassen, sodass eine lokale Anpassung der Fluidströmung durch den Applikatorschlitz (6) bereitgestellt wird; wobei jedes Stellglied (200) ein Messinstrument beinhaltet, wobei jedes Messinstrument so konfiguriert ist, dass eine lokale Messung der Schlitzdüse (10) bereitgestellt wird, wobei die lokale Messung der Querrichtungsdicke der Fluidströmung an der Position des jeweiligen Messinstruments entspricht; und

eine Steuereinheit (300), die so kontrolliert ist, dass die Stellung jedes Stellglieds (200) gemäß einer aus einer Mehrzahl diskreter Einstellungen für den Betrieb der Schlitzdüse (10) eingestellt wird,

einen Sensor, der so konfiguriert ist, dass die Dicken des extrudierten Produkts an mehreren Querbahnorten direkt gemessen werden;

**dadurch gekennzeichnet, dass**

die Steuereinheit (300) ferner so konfiguriert ist, dass unter Verwendung von Fluiddynamik und eines digitalen Modells der Schlitzdüse (10)

ein Satz diskreter Einstellungen aus der Mehrzahl diskreter Einstellungen vorhergesagt wird, der einem vorgewählten Querbahnprofil für das Extrudat entspricht, und

wobei die Steuereinheit (300) ferner so konfiguriert ist, dass:

das Querbahnprofil des Extrudats, nachdem es gemäß den Messungen des extrudierten Produkts den Applikatorschlitz (6) verlassen hat, bewertet wird

auf der Grundlage der Bewertung des Querbahnprofils ermittelt wird, ob Anpassungen am vorhergesagten Satz diskreter Einstellungen ein Querbahnprofil des Extrudats nach dem Austritt aus dem Applikatorschlitz (6) bereitstellen können, das besser mit dem vorgewählten Querbahnprofil übereinstimmt;

nach dem Ermitteln, dass Anpassungen am vorhergesagten Satz diskreter Einstellungen ein Querbahnprofil des Extrudats nach dem Austritt aus dem Applikatorschitz (6) bereitstellen können, das besser mit dem vorgewählten Querbahnprofil übereinstimmt, mit der Steuereinheit (300) ein verbesserter Satz diskreter Einstellungen aus der Mehrzahl diskreter Einstellungen vorhergesagt wird, der der vorgewählten Querbahn entspricht; und

die Stellglieder (200) gemäß dem verbesserten vorhergesagten Satz diskreter Einstellungen während des fortgesetzten Betriebs der Schlitzdüse (10) neu positioniert werden, indem das Extrudat durch den Fluidströmungsweg und aus dem Applikatorschlitz (6) geleitet wird.

2. Das System von Anspruch 1, wobei das Verwenden der Fluiddynamik und des digitalen Modells der Schlitzdüse (10) zum Vorhersagen des Satzes diskreter Einstellungen aus der Mehrzahl diskreter Einstellungen, der dem vorgewählten Querbahnprofil für das Extrudat entspricht, Folgendes umfasst:

getrenntes Modellieren der Fluidströmung an jedem Stellglied (200)
und Festlegen der Positionsanpassungen für jedes Stellglied (200) auf der Grundlage der dem Stellglied (200) zugehörigen modellierten Fluidströmung. (200)

3. Das System nach einem der Ansprüche 1 bis 2, wobei das Vorhersagen des Satzes diskreter Einstellungen aus der Mehrzahl diskreter Einstellungen, der dem vorgewählten Querbahnprofil für das Extrudat entspricht, das Verwenden einer Strömungsempfindlichkeitsmatrix in einer Profilsteuerstrategie zum Steuern des Beschichtungsdickenprofils auf seinen gewünschten Zustand umfasst.

4. Das System nach Anspruch 3, wobei die Profilsteuerstrategie eine Gauß-Newton-Strategie einschließt.

5. Das System nach einem der Ansprüche 3 bis 4, wobei die Strömungsempfindlichkeitsmatrix eine Strömungsempfindlichkeit über die Breite der Schlitzdüse (10) im Verhältnis zur Stellgliedpositionsanpassung für jedes der Vielzahl von Stellgliedern (200) darstellt.

6. Das System nach einem der Ansprüche 1 bis 5, wobei die Steuereinheit (300) ferner so konfiguriert ist, dass der vorhergesagte Satz diskreter Einstellungen einem Benutzer über eine Benutzeroberfläche (320) dargestellt wird.

7. Das System nach einem der Ansprüche 1 bis 6, wobei die Steuereinheit (300) ferner so konfiguriert ist, dass jedes der Mehrzahl von Stellgliedern (200) während des Betriebs der Schlitzdüse (10) gemäß dem vorhergesagten Satz diskreter Einstellungen eingestellt wird.

8. Das System nach einem der Ansprüche 1 bis 7, wobei die Steuereinheit (300) ferner so konfiguriert ist, dass das vorgewählte Querbahnprofil von einem nicht flüchtigen computerlesbaren Medium abgerufen wird.

9. Das System nach einem der Ansprüche 1 bis 8, wobei die Steuereinheit (300) ferner so konfiguriert ist, dass der vorhergesagte Satz diskreter Einstellungen von einer Benutzereingabe empfangen wird.

10. Das System nach einem der Ansprüche 1 bis 9, wobei die Steuereinheit (300) ferner so konfiguriert ist, dass, wenn das Positionieren jedes der Stellglieder (200) mit der Steuereinheit (300) gemäß dem Satz diskreter Einstellungen ein Überwachen einschließt, sie die lokalen Messungen von den Messinstrumenten in der Mehrzahl von Messinstrumenten überwacht und, für jedes der Stellglieder (200), die relative Stellung des Stellglieds anpasst, bis das Stellglied (200) die absolute Querrichtungsdicke des Fluidströmungswegs an der jeweiligen Position des Stellglieds (200) bereitstellt, die durch den Satz diskreter Einstellungen definiert ist.

11. Das System nach Anspruch 10,
wobei die Schlitzdüse (10) ferner einen Drosselungsstab aufweist,
wobei die Mehrzahl von Stellgliedern (200) um eine Breite des Drosselungsstabs angebracht ist und
wobei jedes der Stellglieder (200) betriebsfähig ist, um die Dicke des Fluidströmungswegs an seiner Position zu steuern, indem eine lokale Anpassung der Stellung des Drosselungsstabs innerhalb des Fluidströmungswegs bereitgestellt wird.

12. Das System nach Anspruch 10, wobei jedes Stellglied in der Mehrzahl von Stellgliedern (200) betriebsfähig ist, um eine Querrichtungsdicke des Applikatorschlitzes (6) an seiner jeweiligen Position anzupassen, um die lokale Anpassung der Fluidströmung durch den Applikatorschlitz (6) bereitzustellen.

**Revendications**

1. Système comprenant :

   une matrice de fente (10), dans lequel la matrice de fente (10) inclut :

      une fente d'applicateur (6) s'étendant autour d'une largeur de la matrice de fente (10), dans lequel la fente d'applicateur (6) est en communication fluidique avec un chemin d'écoulement de fluide à travers la matrice de fente (10),
      une pluralité d'actionneurs (200) espacés autour de la largeur de la matrice de fente (10), dans lequel chaque actionneur de la pluralité d'actionneurs (200) peut fonctionner pour ajuster une épaisseur croisée du chemin d'écoulement de fluide à son emplacement respectif pour fournir un ajustement local de l'écoulement de fluide à travers la fente d'applicateur (6) ; chaque actionneur (200) incluant un instrument de mesure, chaque instrument de mesure étant configuré pour fournir une mesure locale de la matrice de fente (10), la mesure locale correspondant à l'épaisseur croisée du chemin d'écoulement de fluide à l'emplacement de l'instrument de mesure respectif ; et
      un système de commande (300) configuré pour régler la position de chaque actionneur ; (200) selon l'un d'une pluralité de réglages distincts pour le fonctionnement de la matrice de fente (10),

   un capteur configuré pour mesurer directement les épaisseurs du produit extrudé à des emplacements de bande croisée multiples ;
   **caractérisé en ce que,**
   le système de commande (300) est en outre configuré, en utilisant la dynamique de fluide et un modèle numérique de la matrice de fente (10), pour
   prédire un ensemble de réglages distincts parmi la pluralité de réglages distincts correspondant à un profil de bande croisée présélectionné pour l'extrudat, et
   dans lequel le système de commande (300) est en outre configuré pour :

      évaluer le profil de bande croisée de l'extrudat après qu'il sort de la fente d'applicateur (6) en fonction des mesures du produit extrudé
      sur la base de l'évaluation du profil de bande croisée, déterminer si les ajustements de l'ensemble prédit de réglages distincts peuvent fournir un profil de bande croisée de l'extrudat après qu'il sort de la fente d'applicateur (6) qui correspond plus étroitement au profil de bande croisée présélectionné ;
      après avoir déterminé des ajustements de l'ensemble prédit de réglages distincts, fournir un profil de bande croisée de l'extrudat après qu'il sort de la fente d'applicateur (6) qui correspond plus étroitement au profil de bande croisée présélectionné, prédire un ensemble amélioré de réglages distincts parmi la pluralité de réglages distincts correspondant à la bande croisée présélectionnée avec le dispositif de commande (300) ;

et

repositionner les actionneurs (200) selon l'ensemble prédit de réglages distincts améliorés pendant le fonctionnement continu de la matrice de fente (10) en faisant passer l'extrudat à travers le chemin d'écoulement de fluide et hors de la fente d'applicateur (6).

2. Système selon la revendication 1, dans lequel l'utilisation d'une dynamique de fluide et du modèle numérique de la matrice de fente (10) pour prédire l'ensemble de réglages distincts parmi la pluralité de réglages distincts correspondant au profil de bande croisée présélectionné pour l'extrudat comprend :

la modélisation séparée de l'écoulement de fluide à chaque actionneur ; (200)
et la détermination des réglages de position pour chaque actionneur (200) sur la base de l'écoulement de fluide modélisé associé à cet actionneur. (200)

3. Système selon l'une quelconque des revendications 1 à 2, dans lequel la prédiction de l'ensemble de réglages distincts parmi la pluralité de réglages distincts correspondant au profil de bande croisée présélectionné pour l'extrudat comprend l'utilisation d'une matrice de sensibilité à l'écoulement dans une stratégie de contrôle de profil afin de contrôler le profil d'épaisseur de revêtement à son état souhaité.

4. Système selon la revendication 3, dans lequel la stratégie de contrôle de profil comprend une stratégie de Gauss Newton.

5. Système selon l'une quelconque des revendications 3 à 4, dans lequel la matrice de sensibilité à l'écoulement représente une sensibilité à l'écoulement sur la largeur de la matrice de fente (10) par rapport à l'ajustement de la position de l'actionneur pour chacun de la pluralité d'actionneurs (200).

6. Système selon l'une quelconque des revendications 1 à 5, dans lequel le système de commande (300) est en outre configuré pour présenter l'ensemble prédit de réglages distincts à un utilisateur par le biais d'une interface utilisateur (320).

7. Système selon l'une quelconque des revendications 1 à 6, dans lequel le système de commande (300) est en outre configuré pour régler chacun de la pluralité d'actionneurs (200) en fonction de l'ensemble prédit de réglages distincts pendant le fonctionnement de la matrice de fente (10).

8. Système selon l'une quelconque des revendications 1 à 7, dans lequel le système de commande (300) est en outre configuré pour récupérer le profil de bande croisée présélectionné à partir d'un support lisible par ordinateur non-transitoire.

9. Système selon l'une quelconque des revendications 1 à 8, dans lequel le système de commande (300) est en outre configuré pour recevoir le profil de bande croisée présélectionné à partir d'une entrée d'utilisateur.

10. Système selon l'une quelconque des revendications 1 à 9, dans lequel le système de commande (300) est en outre configuré, lorsque le positionnement de chacun des actionneurs (200) avec le système de commande (300) selon l'ensemble de réglages distincts inclut la surveillance, pour surveiller les mesures locales des instruments de mesure de la pluralité d'instruments de mesure et, pour chacun des actionneurs (200), ajuster la position relative de l'actionneur jusqu'à ce que l'actionneur (200) fournisse l'épaisseur absolue croisée du chemin d'écoulement de fluide à l'emplacement respectif de l'actionneur (200) défini par l'ensemble de réglages distincts.

11. Système selon la revendication 10,
dans lequel la matrice de fente (10) inclut en outre une barre de support,
dans lequel la pluralité d'actionneurs (200) sont fixés à la barre de support sur environ une largeur de la barre de support, et
dans lequel chacun des actionneurs (200) peut être actionné pour contrôler l'épaisseur du trajet d'écoulement de fluide à son emplacement en fournissant un ajustement local de la position de la barre de support dans le chemin d'écoulement de fluide.

12. Système selon la revendication 10, dans lequel chaque actionneur de la pluralité d'actionneurs (200) peut être actionné pour ajuster une épaisseur croisée de la fente d'applicateur (6) à son emplacement respectif afin de fournir le réglage local de l'écoulement de fluide à travers la fente d'applicateur (6).

FIG. 1A

FIG. 1B

FIG. 2

FIG. 3

FIG. 4

OBTAIN SLOT DIE INCLUDING ACTUATORS
502

OBTAIN CONTROLLER IN COMMUNICATION
WITH ACTUATORS
504

USE FLUID DYNAMICS AND DIGITAL MODEL
TO PREDICT ACTUATOR SETTINGS
506

OPERATE DIE USING PREDICTED ACTUATOR
SETTINGS
508

EVALUATE CROSS-WEB PROFILE
510

PREDICT IMPROVED SETTINGS
512

REPOSITION ACTUATORS ACCORDING TO
IMPROVED SETTINGS WHILE OPERATING DIE
514

FIG. 5

OBTAIN SLOT DIE INCLUDING ACTUATORS
602

OBTAIN CONTROLLER IN COMMUNICATION
WITH ACTUATORS
604

USE FLUID DYNAMICS AND DIGITAL MODEL
TO PREDICT ACTUATOR SETTINGS
606

OPERATE DIE USING PREDICTED ACTUATOR
SETTINGS
608

EVALUATE DIE CAVITY PRESSURE
610

PREDICT IMPROVED SETTINGS
612

REPOSITION ACTUATORS ACCORDING TO
IMPROVED SETTINGS WHILE OPERATING DIE
614

FIG. 6

OBTAIN SLOT DIE INCLUDING ACTUATORS
702

OBTAIN CONTROLLER IN COMMUNICATION
WITH ACTUATORS
704

OPERATE DIE USING SET OF ACTUATOR
SETTINGS
706

OBSERVE DEFECT IN A PROFILE OF THE
EXTRUDENT
708

OPERATE ACTUATORS TO INCREASE CROSS-
DIRECTIONAL THICKNESS OF FLUID FLOW
PATH
710

REPOSITION ACTUATORS ACCORDING TO
ORGINAL SETTINGS WHILE OPERATING DIE
712

FIG. 7

```
┌─────────────────────────────────────────┐
│   OBTAIN SLOT DIE INCLUDING ACTUATORS    │
│                   802                    │
└─────────────────────────────────────────┘
                    │
                    ▼
┌─────────────────────────────────────────┐
│   OBTAIN CONTROLLER IN COMMUNICATION     │
│             WITH ACTUATORS               │
│                   804                    │
└─────────────────────────────────────────┘
                    │
                    ▼
┌─────────────────────────────────────────┐
│      OPERATE DIE USING SET OF ACUATOR    │
│                SETTINGS                  │
│                   806                    │
└─────────────────────────────────────────┘
                    │
                    ▼
┌─────────────────────────────────────────┐
│    OPERATE ACTUATORS TO CLOSE FLUID      │
│               FLOW PATH                  │
│                   808                    │
└─────────────────────────────────────────┘
                    │
                    ▼
┌─────────────────────────────────────────┐
│    PURGE EXTRUDENT FROM PURGE VALVE      │
│    WHILE FLUID FLOW PATH IS CLOSED       │
│                   810                    │
└─────────────────────────────────────────┘
                    │
                    ▼
┌─────────────────────────────────────────┐
│   REPOSITION ACTUATORS ACCORDING TO      │
│  ORGINAL SETTINGS WHILE OPERATING DIE    │
│                   812                    │
└─────────────────────────────────────────┘
                    │
                    ▼
┌─────────────────────────────────────────┐
│           CLOSE PURGE VALVE              │
│                   814                    │
└─────────────────────────────────────────┘
```

FIG. 8

900

904

904

904

902

## FIG. 9

910

912

## FIG. 10

*REPLACEMENT SHEET*

FIG. 11A

FIG. 11B

EP 2 718 086 B1

920

| Die Slot Controller v 1.0 | ⊠ |
|---|---|

Program: | 8_mil_PTFE_4-1-2011 | Select New Program ▽ | 📁 | ⚙ | 12 : 08

Die Temp.: | 357 °F | Die Cavity Pressure: | 825 psi

PURGE ☒

OPEN ☒

RESUME ☒

| Slot Height | Profile | Set to Ave. | Pressure |

960

### Auto-select Setpoints According to Average Profile Thickness

| | | | | | |
|---|---|---|---|---|---|
| Actuator Current Position (Units) | -1799 | -1804 | -1797 | -1801 | -1799 |
| Actual Current Height (mils) | 10.01 | 9.98 | 10.02 | 9.99 | 10.01 |
| Grains/4x6 from Gauge (NDC) | 8.36 | 5.53 | 4.04 | 5.15 | 6.77 |
| Avg. Grains/4x6 from Gauge (NDC) | 5.97 | 5.97 | 5.97 | 5.97 | 5.97 |
| Calculated Height (mils) | 8.94 | 10.24 | 11.41 | 10.50 | 9.59 |
| New Set Point (Units) | -1991 | -1758 | -1547 | -1711 | -1873 |

964
Update New Setpoints

966
Initiate Set to Average

FIG. 11C

EP 2 718 086 B1

920

**Die Slot Controller v 1.0** ☒

Program: | 8_mil_PTFE_4-1-2011 | Select New Program ▽ | 🗁 | ⚙ | 12 : 08

Die Temp.: | 357 °F | Die Cavity Pressure: | 825 psi | PURGE | ☒

| Slot Height | Profile | Set to Ave. | Pressure | OPEN | ☒

970

RESUME | ☒

**Auto-select Setpoints According to Selected Die Cavity Pressure**

| Actuator | 1 | 2 | 3 | 4 | 5 |
|---|---|---|---|---|---|
| Initial Slot Height (mils) | 20 | 20 | 20 | 20 | 20 |
| Initial Set Point (Units) | 0 | 0 | 0 | 0 | 0 |
| Actuator Current Position (Units) | -1799 | -1804 | -1797 | -1801 | -1799 |
| Actual Current Height (mils) | 10.01 | 9.98 | 10.02 | 9.99 | 10.01 |
| Calculated Height (mils) | 10.27 | 10.24 | 10.28 | 10.25 | 10.27 |
| New Set Point (Units) | -1751 | -1756 | -1749 | -1753 | -1751 |

Die Cavity Pressure: | 825 psi

978

Set New Pressure: | 800 psi

974 | 976

Update New Setpoints | Initiate Set to Pressure

**FIG. 11D**

FIG. 12

FIG. 13

FIG. 14 – 1

# Positive Bump (cont'd):

| 8* | 9* | 10* | 11* | 12* | 13* | 14* | 15* |
|---|---|---|---|---|---|---|---|
| b | b | b | b | b | b | b | b |
| 16 | 18 | 20 | 22 | 24 | 26 | 28 | 30 |
| -0.000 | -0.02 | -0.008 | -0.024 | -0.005 | 0.005 | -0.018 | -0.021 |
| 0.008 | -0.008 | 0.000 | -0.013 | 0.002 | 0.023 | -0.005 | -0.015 |
| 0.008 | 0.002 | 0.006 | -0.008 | 0.011 | 0.02 | 0.000 | -0.004 |
| -0.000 | -0.000 | -0.045 | -0.047 | -0.021 | -0.026 | -0.001 | -0.04 |
| -0.07 | -0.077 | -0.000 | -0.091 | -0.045 | -0.051 | -0.054 | -0.061 |
| 0.018 | 0.019 | -0.043 | -0.044 | 0.021 | 0.017 | 0.012 | 0.008 |
| | 0.076 | 0.061 | 0.01 | 0.032 | 0.027 | 0.021 | 0.023 |
| 0.17 | 0.264 | 0.027 | -0.034 | -0.021 | -0.026 | -0.03 | -0.019 |
| 0.239 | 0.517 | 0.07 | 0.017 | 0.017 | -0.02 | -0.032 | -0.018 |
| 0.076 | 0.22 | | | 0.026 | -0.025 | -0.045 | -0.032 |
| 0.022 | 0.077 | | | | 0.032 | -0.039 | -0.043 |
| 0.007 | 0.02 | 0.026 | 0.026 | 0.441 | 0.232 | 0.011 | 0.04 |
| 0.000 | 0.011 | 0.015 | 0.050 | 0.24 | 0.469 | | 0.007 |
| 0.006 | 0.011 | 0.006 | 0.018 | 0.078 | 0.31 | | |
| 0.023 | 0.006 | 0.023 | 0.025 | 0.046 | 0.101 | | |

FIG. 14 – 2

| | 1· c 3 | 2· c 5 | 3· c 7 | 4· c 9 | 5· c 11 | 6· c 13 | 7· c 15 |
|---|---|---|---|---|---|---|---|
| Gap1 | 0.??1 | | 0.116 | 0.00? | -0.03? | -0.019 | -0.00? |
| Gap2 | | 0.505 | | -0.0?1 | 0.00? | -0.00? | 0.013 |
| Gap3 | -0.0?6 | 0.2?9 | 0.4?1 | 0.1?7 | 0.0?9 | 0.00? | 0.00? |
| Gap4 | -0.04 | 0.059 | 0.1?? | | 0.1?4 | 0.077 | |
| Gap5 | -0.026 | -0.01? | -0.0? | | | | |
| Gap6 | -0.023 | -0.00? | -0.031 | 0.0?1 | 0.2?? | -0.5?? | |
| Gap7 | -0.02 | -0.001 | -0.034 | -0.01 | 0.059 | 0.2?3 | |
| Gap8 | -0.03 | -0.00? | -0.035 | -0.004 | 0.033 | 0.073 | |
| Gap9 | -0.032 | -0.011 | -0.034 | -0.001 | -0.0?? | -0.013 | |
| Gap10 | -0.031 | -0.011 | -0.037 | -0.004 | -0.023 | 0.00? | 0.01? |
| Gap11 | -0.025 | -0.004 | -0.039 | 0.003 | -0.021 | 0.004 | 0.017 |
| Gap12 | -0.029 | 0.002 | -0.034 | 0.007 | -0.014 | 0.001 | 0.013 |
| Gap13 | -0.031 | 0.011 | -0.028 | 0.016 | -0.004 | 0.007 | 0.018 |
| Gap14 | -0.03 | 0.014 | -0.023 | 0.017 | -0.005 | 0.005 | 0.022 |
| Gap15 | -0.031 | 0.033 | -0.006 | 0.035 | 0.012 | 0.023 | 0.044 |

FIG. 14 – 3

EP 2 718 086 B1

# Negative Bump (cont'd):

| 8 | 9 | 10 | 11 | 12 | 13 | 14 | 15 |
|---|---|---|---|---|---|---|---|
| c | c | c | c | c | c | c | c |
| 17 | 19 | 21 | 23 | 25 | 27 | 29 | 31 |
| -0.021 | -0.023 | -0.02 | -0.02 | -0.005 | -0.014 | -0.008 | -0.023 |
| -0.014 | -0.014 | -0.004 | -0.015 | -0.001 | -0.006 | 0.002 | 0.002 |
| -0.005 | -0.006 | -0.006 | -0.006 | 0.006 | 0.006 | 0.008 | -0.005 |
| -0.047 | -0.046 | -0.055 | -0.037 | -0.025 | -0.027 | -0.028 | -0.046 |
| -0.102 | -0.091 | -0.103 | -0.064 | -0.052 | -0.051 | -0.05 | -0.074 |
| -0.104 | -0.053 | -0.061 | 0.002 | 0.015 | 0.02 | 0.017 | -0.003 |
| | -0.052 | -0.038 | 0.012 | 0.023 | 0.026 | 0.024 | -0.008 |
| 0.46 | | -0.114 | -0.049 | -0.032 | -0.025 | -0.026 | -0.032 |
| | | | -0.079 | -0.043 | -0.029 | -0.023 | -0.035 |
| | | | | | | -0.027 | -0.049 |
| -0.011 | -0.028 | | | | | -0.046 | -0.070 |
| -0.005 | -0.007 | -0.073 | | | | -0.113 | -0.122 |
| 0.003 | -0.001 | -0.018 | -0.055 | | | | -0.157 |
| 0.005 | 0.004 | -0.009 | -0.006 | 0.001 | | | |
| 0.022 | 0.021 | 0.011 | 0.018 | 0.008 | -0.018 | | |

FIG. 14 – 4

EP 2 718 086 B1

**PDSA Position Calculator**

(Drive to Average - Direct Ct Thickness)

| Actuator | 1 | 2 | 3 | 4 | 5 | 6 | 7 | 8 | 9 |
|---|---|---|---|---|---|---|---|---|---|
| Initial Slot Height (mils) — To Lip Stiffness Calculator | 14.351 | 14.46 | 14.699 | 14.673 | 14.622 | 14.541 | 14.414 | 14.287 | 14.268 |
| Initial Set Point (Units) — To Lip Stiffness Calcuator | -981 | -859 | -685 | -510 | -757 | -840 | -756 | -796 | -1001 |
| Actuator Current Pos⁻ ⁻⁻ 's) — To Lip Stiffness Calcuator | -981 | -859 | -685 | -510 | -757 | -840 | -756 | -796 | -1001 |
| Actual Current Height (mils) — From Lip Stiffness Calculator | 14.351 | 14.460 | 14.699 | 14.673 | 14.622 | 14.541 | 14.414 | 14.287 | 14.268 |
| Entered Desired Slot, mil — Usually a Flat Uniform Slot | 14.50 | 14.50 | 14.50 | 14.50 | 14.50 | 14.50 | 14.50 | 14.50 | 14.50 |
| New Set Point (Units) — From Lip Stiffness Calcuator | -960 | -801 | -791 | -524 | -787 | -853 | -745 | -739 | -952 |
| Actuator Change - Units | 21 | 58 | -106 | -14 | -30 | -13 | 11 | 57 | 49 |

Represents values that need to be input

**FIG. 15 - 1**

# Pdsa Posaition Calculator (cont'd)

EP 2 718 086 B1

| K | L | M | N | O | P | Q | R |
|---|---|---|---|---|---|---|---|
| 10 | 11 | 12 | 13 | 14 | 15 | | |
| 14.29 | 14.269 | 14.339 | 14.371 | 14.255 | 14.116 | From Die Slot Measurements (Capacitec) | |
| -646 | -743 | -694 | -840 | -944 | -1130 | From PDSA Actuator Positions | |
| -646 | -743 | -694 | -840 | -944 | -1130 | | |
| 14.290 | 14.269 | 14.339 | 14.371 | 14.255 | 14.116 | 14.40 | Average |
| 14.50 | 14.50 | 14.50 | 14.50 | 14.50 | 14.50 | | |
| -629 | -676 | -673 | -840 | -897 | -1056 | To PDSA Actuator Positions | |
| 19 | 67 | 21 | 0 | 47 | 74 | | |

FIG. 15 - 2

FIG. 16

**Flow Sensitivity: Bolt 4**
**Location: 8.0**

**Flow sensitivity measurement is normalized to the central thickness

FIG. 17

EP 2 718 086 B1

REPLACEMENT SHEET

OBTAIN SLOT DIE
1202

REMOVE ACTUATION MECHANISMS FROM
SLOT DIE HOUSING
1204

INSTALL ACTUATOR ASSEMBLIES IN PLACE
OF ACTUATION MECHANISMS
1206

FORM LINK BETWEEN ACTUATOR
ASSEMBLIES AND CONTROLLER
1208

POSITION ACTUATOR ASSEMBLIES
ACCORDING TO PREDICTED SETTINGS
1210

OPERATE DIE USING PREDICTED ACTUATOR
SETTINGS
1212

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0307076 A
- US 5770129 A
- EP 0357071 A
- US 6039904 A

**Non-patent literature cited in the description**

- **RICHARD L. BURDEN et al.** Numerical Analysis. 1981, 131-133